# EUROPEAN PATENT SPECIFICATION

(11) **EP 3 365 168 B1**
(45) Date of publication and mention of the grant of the patent: **30.06.2021**
(21) Application number: 16791179.1
(22) Date of filing: 20.10.2016
(51) Int. Cl.: B32B 5/18, B32B 5/20, B32B 5/22, B32B 7/00, B32B 7/02, B32B 27/00, B32B 27/06, B32B 27/08, B32B 27/18, B32B 27/28, B32B 27/36, B32B 27/40, C08L 53/00

(54) **LIGHTWEIGHT FLAME RETARDANT THERMOPLASTIC STRUCTURES**
LEICHTE FLAMMHEMMENDE THERMOPLASTISCHE STRUKTUREN
STRUCTURES THERMOPLASTIQUES IGNIFUGES LÉGÈRES

(30) Priority: 21.10.2015 US 201562244529 P
(43) Date of publication of application: 29.08.2018
(73) Proprietor: Schneller, LLC, Kent, OH 44240 (US)
(72) Inventor: ROWLES, Brian A., Akron, OH 44312 (US); HARTHCOCK, Matthew A., Stow, OH 44224 (US)
(74) Representative: Barker Brettell LLP
(86) International application number: PCT/US2016/057798
(87) International publication number: WO 2017/070276

(56) References cited:
- US-A- 5 760 099
- US-A1- 2006 247 345
- US-A1- 2012 264 844
- US-A1- 2014 315 010

## Description

### Technical Field

The present disclosure pertains generally to lightweight, flame retardant thermoplastic and thermoformable structural composites particularly suitable for aircraft interior components compliant with aviation requirements for flame, smoke, and toxicity as well as other industries including maritime, recreational vehicles, mobile homes. The present disclosure further includes processes for manufacturing the disclosed structural composites and products.

### Background of the Invention

Increased fuel economy is becoming increasingly important in all areas of transportation, driving the need for lighter weight designs with the associated difficulties in maintaining or even improving the strength and structural integrity of previous designs. Weight reduction is particularly important in vehicles for mass transportation such as trains and commercial airliners. To maintain, supplement and enhance the strength of light weight panels and other products used in the interiors of commercial airliners, it is beneficial or even necessary that all components of the assembly contribute to the structural integrity and impact resistance of the final design. It is increasingly important that components be designed to maintain, supplement or enhance the strength and durability of the panels and surfaces that they cover. Importantly, the ability of components to increase strength and durability must be achieved while maintaining strict requirements for flame retardancy in the areas of heat release, smoke generation and emission of potentially harmful products on combustion. US 2014/050901 discloses a fire resistant laminate for a cabin component of an aircraft.

### Summary of the Invention

In the present invention, the surface layer, the backing layer and preferably foamed interposed middle layer are comprised of flame retardant engineering thermoplastic materials, including films. The term "engineering thermoplastic materials" may be defined generally as, "thermoplastic resins, neat or filled, which maintain dimensional stability and most mechanical properties above 100°C as well as below 0°C." Engineering thermoplastics are additionally defined as encompassing "plastics that can be formed into parts suitable for bearing loads and able to withstand abuse in thermal environments traditionally tolerated by metals, ceramics, glass and wood" and as "high performance materials that provide a combination of high ratings for mechanical, thermal, electrical, and chemical properties."

The basic concept is to produce a thermoformable product for the aviation industry that has the following features: lightweight compared to current product offerings translating into fuel savings for airlines; passes standard physical requirements, such as Gardner dart impact; and passes "Flammability, Smoke, and Toxicity" ("FST") and heat release requirements for Original Equipment Manufacturers ("OEMs"). For example, the product may provide for compliance with FAR 25-853 (a)(1)(i) of 60-second vertical burn and FAR 25-853(a)(1)(ii) 12-second vertical burn. Specific optical smoke density is tested by NBS smoke chamber. The average peak smoke density within 4-minute should not exceed 200 regulated by FAR 25-853(d) and less as may be regulated by OEMs. Toxicity of burning gas is measured by Draeger tube, and the average concentration (in parts per million, ppm) of the following gas components in smoke should not exceed the limits within relevant test duration and required test conditions. HF<100 Heat release is measured, and the total 2-minute heat release (THR) and heat release rate (HRR) should not exceed 65 KW-min/m2 and 65 KW/m2, respectively regulated by FAR 25-853(d).

Initial development focused on melt-processable flame retardant additives to achieve the FST compliant characteristics, as opposed to the use of solid additives which can create unwanted cell structures in foamed products. One flame retardant additive material of choice was a polyphosphonate copolymer with polycarbonate (Nofia™ CO6000) manufactured by FRX Polymers, Inc., 200 Turnpike Rd., Chelmsford, MA 01824. Compounding was completed on a 25mm 40/1 LDR co-rotating twin screw extruder and the extrudate was formed into solid sheet for lab testing purposes. Extrusion conditions were typical for polycarbonate extrusion with the melt temperature leveling out at ∼465°F (241°C). Subsequent runs were able to decrease the melt temperature during extrusion to ∼435°F (224°C). This was preferred as a means to minimize thermal degradation of the polymer system. The material allowed for ease of compounding, flame characteristics that pass required testing, and employ thermoforming conditions that are typical in the industry. Levels of the polyphosphonate copolymer were initialing trialed at a 35% by weight level and testing values for FST and physical parameters were in the acceptable range. Higher levels of the polyphosphonate copolymer, up to and including 50% by weight, have been trialed with similar results as noted above.

A foam version of the above structural laminate was synthesized and tested to confirm viability of a more lightweight product. A three-layer composite blend of the 35% polyphosphonate 65% PC copolymer (FRX CO6000) was made and trials were generated. These samples were foamed at varying cell size, overall densities changes, wall thickness ratios, and overall sheet thicknesses. Laboratory testing showed that each of the multiple variations passed all of the physical requirements to certain degrees, but the FST testing showed limited acceptance for the OSU rate of heat release values. Some of the samples passed at just below the required FAR 25.583(a), App. F while others failed at just above the required OSU values.

Because of the possibility of OSU failure, other types of flame retardant systems were trialed on the solid sheet extrusion material. Halogenated systems containing bromine and blended samples with bromine and phosphorous were run with varied results.

For the structural composites of the present disclosure, base formulations ("resin") of the thermoplastic are selected from a group including polycarbonate; polyphenolsulfate; polysulfone; polyetherimide; and polyetherketone. The resin will generally comprise a copolymer compounded into a branched amorphous polycarbonate of high molecular weight. Additive options for the resin are selected from a group including phosphonates; ceramic foams; expandable beads; and glass microspheres. One representative example of materials useful in this invention includes Bayer PC ET 3227 (branched) having a density of 1.20 g/cm³; T_{g}/Vicat ∼ 146°C; HDT @ 66psi of ∼ 140°C; while the flame retardant additive includes a Nofia CO4000 or Nofia CO6000 poly(phosphonate-co-carbonate) having between 3.7 & 6.4% available phosphorus.

Therefore, what will be described in more detail below is A laminate extruded composition comprising: a pair of opposed top and bottom non-foamed layers; at least one interposed middle foamed layer, the middle foamed layer foamed using supercritical fluids; each of said layers comprising a flame retardant copolyphosphonate, the copolyphosphonate having a weight average molecular weight of between 10,000 g/mole to 100,000 g/mole (measured with GPC), the copolyphosphonate having a polydispersity of between 2 to 7, the copolyphosphonate having a single glass transition temperature; a percentage ratio of the at least three layers ranging from 7-13% / 75-85% / 7-13%, the at least three layers totaling 100%; a total thickness of the three layers ranging from 1.016mm to 12.7mm (0.040" to 0.500");and the laminate having an OSU Heat Release Total value of < 65 kW min/m² and an OSU Heat Release Peak value of < 65 kW/m² (measured with ASTM E906).

In the laminate, in one embodiment of the invention, the copolyphosphonate is selected from the group consisting of copoly(phosphonate carbonates) and copoly(phosphonate esters). The copolyphosphonate may be selected from the group consisting of block copoly(phosphonate carbonate(s)), random copoly(phosphonate carbonates), block copoly(phosphonate esters) and random copoly(phosphonate esters). The copolyphosphonate may also be selected from the group consisting of block copoly(phosphonate carbonates) and random copoly(phosphonate carbonates).

The polycarbonate block of the copolyphosphonate may be a linear or preferably, branched polycarbonate. The polycarbonate block of the copolyphosphonate will preferably contain bisphenol A.

The laminate extruded composition of is preferably thermoformed into a molded shape in which the molded shape is a component of an aircraft interior, a train interior or a marine-based interior. When designed for aircraft applications, the laminate extruded composition is a component of an access panel, door, light panel, ceiling panel, housing for a television, magazine rack, seat back, a trolley cart component, side wall, storage housing tray table, window molding, window slide or window, galley surface, partition, shelf or cabin wall.

The laminate extruded composition may further include at least one other additive, particularly at least one brominated agent present in quantities less than 1 wt.%.

The invention also includes a process to synthesize a lightweight and flame retardant laminate having at least an opposed pair of top and bottom non-foamed layers and at least one interposed middle foamed layer, comprising the steps of: extruding the opposed pair of top and bottom non-foamed layers; simultaneously extruding at least one interposed middle foamed layer using supercritical fluid as a blowing agent; thermoforming the extruded laminate into a molded shape; each of said layers comprising a flame retardant copolyphosphonate, the copolyphosphonate having a weight average molecular weight of between 10,000 g/mole to 100,000 g/mole (measured with GPC), the copolyphosphonate having a polydispersity of between 2 to 7, the copolyphosphonate having a single glass transition temperature; a percentage ratio of the at least three layers ranging from 7-13% / 75-85% /7-13%, the at least three layers totaling 100%; a total thickness of the three layers ranging from 1.016mm to 12.7mm (0.040" to 0.500"); and the laminate having an OSU Heat Release Total value of < 65 kW min/m² and an OSU Heat Release Peak value of < 65 kW/m² (measured with ASTM E906). It is also within the scope of this invention that additional layers in the form of a laminate may be added to the structural composite for enhanced performance or aesthetics.

### Detailed Description of the Invention

The present disclosure can be understood more readily by reference to the following detailed description of the invention and the examples contained therein.

It is also to be understood that the terminology used herein is for the purpose of describing particular aspects only and is not intended to be limiting. As used in the specification and in the claims, the term "comprising" can include the embodiments "consisting of" and "consisting essentially of" unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" can include mixtures of two or more polycarbonate polymers.

As used herein, the term "combination" is inclusive of blends, mixtures, alloys, reaction products, and the like. The term "composite" includes laminate structures both produced and joined into products.

Ranges can be expressed herein as from one particular value, and/or to another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of a reinforcing filler refers to an amount that is sufficient to achieve the desired improvement in the property modulated by the formulation component, e.g. achieving the desired level of modulus. The specific level in terms of wt % in a composition required as an effective amount will depend upon a variety of factors including the amount and type of polycarbonate, amount and type of polycarbonate, amount and type of thermally conductive filler, and end use of the article made using the composition.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt %," and "wt. %," which can be used interchangeably, indicate the percent by weight of a given component based on the total weight of the composition, unless otherwise specified. That is, unless otherwise specified, all wt % values are based on the total weight of the composition. It should be understood that the sum of wt % values for all components in a disclosed composition or formulation are equal to 100.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this disclosure belongs.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl. A "lower alkyl" group is an alkyl group containing from one to six carbon atoms.

The term "alkenyl group" as used herein refers to a compound including an alkene of 2 to 20 carbon atoms or more.

The term "alkynyl group" as used herein refers to a compound including an alkyne of 2 to 20 carbon atoms or more.

The term "cyclic group" as used herein is any carbon-based aromatic or non-aromatic group including generally between 5 and 40 carbon atoms, such as, but not limited to, benzene, naphthalene. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

The terms "BisA," "BPA," or "bisphenol A," which can be used interchangeably, as used herein refers to a compound having a structure by the formula: 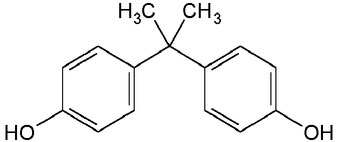 BisA can also be referred to by the name 4,4'-(propane-2,2-diyl)diphenol; p,p'-isopropylidenebisphenol; or 2,2-bis(4-hydroxyphenol)propane. BisA has the CAS #80-05-7.

The term "carbonate" as used herein is given its customary meaning, e.g., a salt of carbonic acid containing the divalent, negative radical CO or an uncharged ester of this acid. A "diaryl carbonate" is a carbonate with at least two aryl groups associated with the CO radical, the most predominant example of a diaryl carbonate is diphenyl carbonate; however, the definition of diaryl carbonate is not limited to his specific example.

The terms "flame retardant," "flame resistant," "fire resistant," or "fire resistance," as used herein means that means that the composition exhibits a limiting oxygen index (LOI) of at least 27. "Flame retardant," "flame resistant," "fire resistant," or "fire resistance," may also be tested by measuring the after-burning time in accordance with the UL test (Subject 94). In this test, the tested materials are given classifications of UL-94 V-0, UL-94 V-1 and UL-94 V-2 on the basis of the results obtained with the ten test specimens. Briefly, the criteria for each of these UL-94-V-classifications are as follows:

UL-94 V-0: the total flaming combustion for each specimen after removal of the ignition flame should not exceed 10 seconds and the total flaming combustion for 5 specimens should not exceed 50 seconds. None of the test specimens should release any drips which ignite absorbent cotton wool.

UL-94 V-1: the total flaming combustion for each specimen after removal of the ignition flame should not exceed 30 seconds and the total flaming combustion for 5 specimens should not exceed 250 seconds. None of the test specimens should release any drips which ignite absorbent cotton wool.

UL-94 V-2: the total flaming combustion for each specimen after removal of the ignition flame should not exceed 30 seconds and the total flaming combustion for 5 specimens should not exceed 250 seconds. Test specimens may release flaming particles, which ignite absorbent cotton wool.

Fire resistance may also be tested by measuring after-burning time. These test methods provide a laboratory test procedure for measuring and comparing the surface flammability of materials when exposed to a prescribed level of radiant heat energy to measure the surface flammability of materials when exposed to fire. The test is conducted using small specimens that are representative, to the extent possible, of the material or assembly being evaluated. The rate at which flames travel along surfaces depends upon the physical and thermal properties of the material, product or assembly under test, the specimen mounting method and orientation, the type and level of fire or heat exposure, the availability of air, and properties of the surrounding enclosure. If different test conditions are substituted or the end-use conditions are changed, it may not always be possible by or from this test to predict changes in the fire-test-response characteristics measured. Therefore, the results are valid only for the fire test exposure conditions described in this procedure.

The state-of-the-art approach to rendering polymers flame retardant is to use additives such as brominated compounds or compounds containing aluminum and/or phosphorus. Use of the additives with polymer can have a deleterious effect on the processing characteristics and/or the mechanical performance of articles produced from them. In addition, some of these compounds are toxic, and can leach into the environment over time making their use less desirable. In some countries, certain brominated additives are being phased-out of use because of environmental concerns.

"Molecular weight," as used herein, can be determined by relative viscosity (ηᵣₑₗ) and/or gel permeation chromatography (GPC). "Relative viscosity" of a polymer is measured by dissolving a known quantity of polymer in a solvent and comparing the time it takes for this solution and the neat solvent to travel through a specially designed capillary (viscometer) at a constant temperature. Relative viscosity is a measurement that is indicative of the molecular weight of a polymer. It is also well known that a reduction in relative viscosity is indicative of a reduction in molecular weight, and reduction in molecular weight causes loss of mechanical properties such as strength and toughness. GPC provides information about the molecular weight and molecular weight distribution of a polymer. It is known that the molecular weight distribution of a polymer is important to properties such as thermo-oxidative stability (due to different amount of end groups), toughness, melt flow, and fire resistance, for example, low molecular weight polymers drip more when burned.

This invention incorporates poly(carbonate-co-phosphonate) copolymers - which are melt processable, miscible flame retardants -- as an additive, which were chosen due to their uniqueness in design and compatibility with polycarbonates. The invention incorporates this phosphonate additive into traditional engineering thermoplastics while also adding a process modification during the extrusion process -- injecting super critical nitrogen or carbon dioxide (or any inert gas) -- to create a foamed extrudate sheet. The invention differs from known products because other similar component systems typically use additives (such as diazocarbomides or other chemical structures) which alter the overall chemistry of the system as well as typically creating non-uniform cell structures or foam. These compositions typically do not have practical physical characteristics that would allow for a full range of plastic processes used in the manufacture of aviation components. Conversely, the invention does not contain additive chemistries that create the foam thereby allowing for most of the base thermoplastic properties to be utilized.

Polycarbonates (PC) are outstanding engineering thermoplastics that have an excellent combination of properties, such as, high heat distortion temperature (HDT), low color, transparency, melt processability, and outstanding toughness. These materials are used in a wide variety of applications and are produced commercially on an enormous scale. However, polycarbonates lack the requisite flame resistance, and there is a demand and still a need for flame resistant PCs that also maintain their other advantageous properties. A variety of approaches have been undertaken to impart flame resistance to these materials, but these approaches have been unsuccessful largely because they detract from the important inherent properties that PCs possess.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

In one aspect, the disclosed polymer compositions can comprise a polycarbonate polymer composition wherein the polycarbonate polymer comprises bisphenol A, a polycarbonate copolymer, polyester carbonate polymer, or polycarbonate-polysiloxane copolymer, or combinations thereof in combination with a polyphosphonate polymer (as defined herein).

In one aspect, a polycarbonate can comprise any polycarbonate material or mixture of materials, The term polycarbonate can be further defined as compositions have repeating structural units of the formula (I): 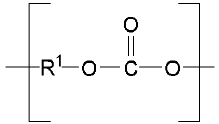 in which at least 60% of the total number of R¹ groups are aromatic organic radicals and the balance thereof are aliphatic, alicyclic or aromatic radicals. In a further aspect, each R¹ is an aromatic organic radical and, more preferably, a radical of formula (II):

-A¹-Y¹-A²-

wherein each of A¹ and A² is a monocyclic divalent aryl radical and Y¹ is a bridging radical having one or two atoms that separate A¹ from A². In various aspects, one atom separates A¹ from A². For example, radicals of this type include, but are not limited to, radicals such as -O-, -S-, -S(O) -, -S(O₂) -, -C(O) -, methylene, cyclohexyl-methylene, 2-[2.2.1]-bicycloheptylidene, ethylidene, isopropylidene, dichloroethylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene.

In a further aspect, polycarbonates can be produced by the interfacial reaction of dihydroxy compounds having the formula HO-R¹-OH, which includes dihydroxy compounds of formula (III):

HO-A¹-Y¹-A²-OH

wherein Y¹, A¹ and A² are as described above. Also included are bisphenol compounds of general formula (IV): 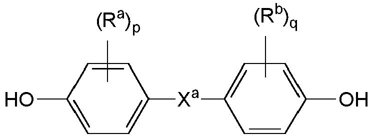 wherein R^{a} and R^{b} each represent a halogen atom or a monovalent hydrocarbon group and can be the same or different; p and q are each independently integers from 0 to 4; and X^{a} represents one of the groups of formula (V): 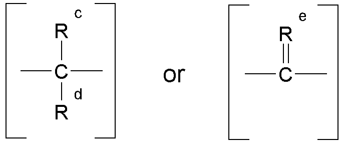 wherein R^{c} and R^{d} each independently represent a hydrogen atom or a C₁₋₈ monovalent linear or cyclic hydrocarbon group and R^{e} is a divalent hydrocarbon group.

In various aspects, a heteroatom-containing cyclic alkylidene group comprises at least one heteroatom with a valency of 2 or greater, and at least two carbon atoms. Heteroatoms for use in the heteroatom-containing cyclic alkylidene group include -O-, -S-, and -N(Z) -, where Z is a substituent group selected from hydrogen, hydroxy, C₁₋₁₂ alkyl, C₁₋₁₂ alkoxy, or C₁₋₁₂ acyl. Where present, the cyclic alkylidene group or heteroatom-containing cyclic alkylidene group can have 3 to 20 atoms, and can be a single saturated or unsaturated ring, or fused polycyclic ring system wherein the fused rings are saturated, unsaturated, or aromatic.

In various aspects, examples of suitable dihydroxy compounds include the dihydroxy-substituted hydrocarbons disclosed by name or formula (generic or specific) include the nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, α,α'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 3,3-bis(4-hydroxyphenyl)phthalimidine, 2-phenyl-3,3-bis-(4-hydroxyphenyl)phthalimidine (PPPBP), as well as mixtures including at least one of the foregoing dihydroxy compounds.

In a further aspect, examples of the types of bisphenol compounds that can be represented by formula (III) includes 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis(4-hydroxy-1-methylphenyl)propane, and 1,1-bis(4-hydroxy-t-butylphenyl)propane. Combinations including at least one of the foregoing dihydroxy compounds can also be used.

Embodiments of the invention generally relate to polymer compositions including a mixture of one or more copolyphosphonates and optionally one or more organic salts and, in some embodiments, one or more polyphosphonate, one or more polycarbonate, and optionally one or more organic salts. Other embodiments are directed to one or more copolyphosphonates and one or more organic salts and in further embodiments, one or more copolyphosphonates, one or more polycarbonates, and one or more organic salts. Yet other embodiments are directed to one or more polycarbonates, one or more copolyphosphonates, and one or more organic salts. As used interchangeably herein, the term "copolyphosphonate" further includes poly(phosphonate-co-carbonate)s, polyphosphonate PC copolymers, and polyphosphonate copolymer with polycarbonate.

In certain embodiments, the polyphosphonates may be characterized as exhibiting at least one, and preferably all of a broad molecular weight distribution with polydispersities of 3.2 or greater, 2.5 or greater, and 2.3 or greater, an M*_{w}* of greater than about 10,000 using polystyrene standards, and a T*_{g}* of at least 100°C. In some embodiments, the polyphosphonates may have a T*_{g}* of about 25°C. to about 140°C., about 50°C. to about 135°C., or about 75°C. to about 130°C. In particular embodiments, the polyphosphonates may be prepared from an aryl phosphonic acid ester and bisphenol A or a mixture of bisphenol A and other bisphenols and a phosphonium catalyst or an alkyl metal catalyst such as a sodium catalyst, and may have a relative viscosity of at least 1.1, transparency, and improved hydrolytic stability. Such polyphosphates may be branched polyphosphonates or linear or cyclic.

In some embodiments, the amount of hydroxy aromatic to aryl phosphonic acid ester may be modified to affect properties of the polyphosphonates. For example, a polyphosphonate prepared using a phosphonium catalysts such as, for example, tetraphenyl phosphonium phenolate exhibits a T*_{g}* of at least 100°C., at least 105°C., at least 110°C., at least about 120°C., at least about 130°C., or at least about 140°C. These polyphosphonates may exhibit a weight average molecular weight (M*_{w}*) ranging from about 10,000 g/mole to about 200,000 g/mole, about 12,000 g/mole to about 150,000 g/mole, about 15,000 g/mole to about 140,000 g/mole, about 20,000 g/mole to about 100,000 g/mole or any value between theses ranges based on polystyrene standards. In particular embodiments, the weight average molecular weight (M*_{w}*) of about 10,000 g/mole to about 100,000 g/mole. In general, such polyphosphonates may have a polymer dispersity of greater than about 3.

The term "copolyphosphonate" as used herein is meant to encompass copoly(phosphonate carbonates) and copoly(phosphonate esters) and include block copoly(phosphonate carbonates), random copoly(phosphonate carbonates), block copoly(phosphonate esters), and random copoly(phosphonate esters). The constituent components of such copolyphosphonates may include any type of phosphonate and carbonate components.

The random copolyphosphonate of various embodiments may be any random copolyphosphonate known in the art. In some embodiments, the random copolyphosphonates may be prepared from at least 20 mole % high purity optionally substituted diaryl alkylphosphonate, one or more diphenyl carbonate, and one or more bisphenol, wherein the mole percent of the high purity diaryl alkylphosphonate is based on the total amount of transesterification components, i.e., total diaryl alkylphosphonate and total diphenyl carbonate.

The phosphonate and carbonate content of the copolyphosphonates may vary among embodiments, and embodiments are not limited by the phosphonate and/or carbonate content or range of phosphonate and/or carbonate content. For example, in some embodiments, the copolyphosphonates may have a phosphorus content that is indicative of the phosphonate content of from about 1% to about 15% by weight of the total copolyphosphonate, and in other embodiments, the phosphorous content of the copolyphosphonates of the invention may be from about 2% to about 12% or about 4% to about 10% by weight of the total polymer.

The copolyphosphonates of various embodiments exhibit both a high molecular weight and a narrow molecular weight distribution (i.e., low polydispersity). As used herein, The weight average molecular weight (M*_{w}*) divided by the number average molecular weight (M*ₙ*) is referred to as the polydispersity (PD = M*_{w}*/M*ₙ*). For example, in some embodiments, the copolyphosphonates may have a weight average molecular weight (M*_{w}*) of about 10,000 g/mole to about 100,000 g/mole as determined by (ηᵣₑₗ) or GPC using polystyrene standards, and in other embodiments, the copolyphosphonates may have a M*_{w}* of from about 12,000 to about 80,000 g/mole as determined by (ηᵣₑₗ) or GPC using polystyrene standards. The narrow molecular weight distribution (i.e., M*_{w}*/M*ₙ*) of such copolyphosphonates may be from about 2 to about 7 in some embodiments and from about 2 to about 5 in other embodiments. In still other embodiments, the random copolyphosphonates may have a relative viscosity of from about 1.0 to about 1.75, about 1.1 to about 1.5, about 1.2 to about 1.4, or any value between these exemplary ranges. In further embodiments, the copolyphosphonate may have a T*_{g}* of about 25°C. to about 140°C., about 50°C. to about 135°C., or about 75°C., to about 130°C.

The random copolyphosphonates of the invention generally exhibit high molecular weight and narrow molecular weight distribution, which in-turn, may impart a superior combination of properties. For example, the random copolyphosphonates of embodiments are generally tough, extremely flame retardant, and exhibit superior hydrolytic stability. In addition, the copolyphosphonates of embodiments generally exhibit an excellent combination of processing characteristics including, for example, good thermal and mechanical properties.

The block copolyphosphonates useful in embodiments of the invention may be any block copolyphosphonate known in the art. In general, the block copolyphosphonates may include at least one phosphonate oligomer or polyphosphonate and one or more oligoester or polyester or oligocarbonate or polycarbonate covalently linked to the at least one phosphonate oligomer or polyphosphonate to form a poly(block-phosphonato-ester) or poly(block-phosphonato-cabonate). In some embodiments, the at least one phosphonate oligomer or poly phosphonate and one or more polyester or polycarbonate may be linked to one another by transesterification or polycondensation, and in certain embodiments, the poly(block-phosphonato-ester) and/or poly(block-phosphonato-carbonate) has a single glass transition temperature (T*_{g}*).

The phosphonate oligomer or polyphosphonate of the block copolyphosphonates before incorporation into the block copolyphosphonate may have a solution viscosity (ηᵣₑₗ) of from about 1.03 to greater than about 1.35 and may have a T*_{g}* of from about 25°C. to about 140°C. In some embodiments the phosphonate oligomer or polyphosphonate may be branched or linear and can be prepared with up to about 50 mol. % branching agent. In other embodiments, the phosphonate oligomer of polyphosphonate may have a molecular weight (M*_{w}*) of from about 2,000 g/mol to about 35,000 g/mol, and, in certain embodiments, the phosphonate oligomer or polyphosphonate may be prepared from at least a stoichiometrically imbalanced mixture of a phosphoric acid diaryl ester and a bisphenol.

Either commercial or custom synthesized branched or linear polycarbonates may be suitable for use in embodiments of the invention. In some embodiments the polycarbonates may have a relative viscosity (ηᵣₑₗ) of at least about 1.2 or from about 1.02 to about 1.2 in certain embodiments. Non-limiting examples of commercially available polycarbonates may be those available under the trade names Lexan (General Electric Company), Makrolon (Bayer AG), Apec (Bayer AG), Hiloy (ComAlloy), Calibre (Dow Chemical Co.), Lupilonx (Mitsubishi), Naxell (MRC Polymers), Edgetek (PolyOne), Trirex (Kasei) and Panlite (Teijin Chemicals). It should be understood that any polycarbonate available now or in the future may be used in embodiments of the method presented herein.

Custom polycarbonates may be prepared by any method known in the art. For example, custom polycarbonates may be synthesized from diphenyl carbonate and any known bisphenol using a transesterification catalyst, and in the case of branched polycarbonates, a branching agent, or by an interfacial polycondensation process using phosgene and any bisphenol with or without a branching agent. A variety of bisphenols can be used in such reactions, and a compilation of known bisphenols readily available and well known to those skilled in the art including those containing heterocyclic structures can be found in "Engineering Plastics: A Handbook of Polyarylethers" by Robert J. Cotter, Gordon and Breach Science Publishers S.A., Switzerland 1995. For example, bisphenols may include, but are not limited to, resorcinol, hydroquinone, 4,4'-biphenol, 2,2-bis(4-hydroxyphenyl)propane (bisphenol A), 3,3'-biphenol, 4,4'-dihydroxyphenyl ether, 4,4'-dihydroxydiphenylsulfone, 9,9-dihydroxyphenyl fluorine, 1,1-bis(4-hydroxyphenyl)-3,3-dimethyl-5-methylcyclohexane, 4,4'-dihydroxybenzophenone, 4,4'-dihydroxyphenyl sulfide, 1-methyl-1-phenyl bis(4-hydroxyphenyl)methane, bis(3-hydroxyphenyl)methane, bis(4-hydroxyphenyl)methane, 9,9-bis(3-methyl-4-hydroxyphenyl)fluorene, 9,9-bis(3,5-dimethyl-4-hydroxyphenyl)fluorine, 1,4-bis[(4-hydroxyphenyl)-2-propyl]benzene, 1,4-bis[(4-hydroxyphenyl)-3,5 dimethylphenyl]-2-propyl]benzene, 4,4'-bis(4-hydroxyphenyl)diphenyl methane, 2,2-bis(4-hydroxyphenyl)hexafluoroisopropylidene, 1-trifluoromethyl-1-phenyl bis(4-hydroxyphenyl)methane and combinations thereof.

In further embodiments, the poly(carbonate-co-polyphosphonate) copolymers may further include an additional polymer, and in other embodiments, these mixtures, which may or may not include an additional polymer, may also include one or more silicon containing compounds. The copolyphosphonates of various embodiments can be either random copolymers in which monomers of the copolyphosphonates of various embodiments are incorporated into polymer chain randomly or block copolymers in which polycarbonate portions and polyphosphonate portions of the copolymer are covalently linked. The polymer compositions of the invention generally provide improved flame resistance over polymer compositions including polycarbonate or copolycarbonate alone or mixtures of polycarbonate or copolycarbonate with organic salts. This improvement is better than would be expected based on the additive effect of a mixture including polycarbonates, polyphosphonates, and organic salts. Thus, these mixtures may exhibit synergistic effects.

Any organic salt known in the art may be used in polymer compositions embodied and described herein. An "organic salt," as used herein, encompasses any compound formed by the reaction between an organic acid and an inorganic base. All such organic acids are encompassed by various embodiments. In certain embodiments, the organic salt may be a "sulfonic acid," which, as defined herein encompasses organic compounds including the structure R-SO₂OH, in which the sulfur atom, S, is bonded to a carbon atom that may be part of a large aliphatic or aromatic hydrocarbon, R, and also bonded to three oxygen atoms, O, one of which has a hydrogen atom, H, attached to it. The hydrogen atom makes the compound acidic, much as the hydrogen of a carboxylic acid. However, carboxylic acids are weak (with dissociation constants of about 10⁻⁵), sulfonic acids are considered strong acids (with dissociation constants of about 10⁻²).

Exemplary organic salts include, but are not limited to, sodium 2,5-difluorobenzenesulfonate, sodium 2,4,5-tribromobenzenesulfonate, sodium p-iodobenzenesulfonate, sodium 2,4-dibromo-5-fluorobenzenesulfonate, calcium 2,5-dichlorobenzenesulfonate, disodium 2,5-dichlorobenzene-1,3-disulfonate, sodium 4,4'-dibromobiphenyl-3-sulfonate, disodium 1,4-dichloronaphthalene-x,y-di-sulfonate, disodium 2,2-dichloro-1,1-bis(4'-chloro-phenyl)ethylene-3',3"-disulfonate; sodium 2,4-dinitrobenzenesulfonate, calcium 2-chloro-5-nitrobenzenesulfonate, calcium 3-(trifluoromethyl)benzenesulfonate, sodium 3-bromo-5-(trifluoromethyl)benzenesulfonate, lithium 2,4,5-trichlorobenzenesulfonate, lithium p-bromobenzenesulfonate, barium 2,4,5-trichlorobenzenesulfonate, potassium 4-chloro-3-nitrobenzenesulfonate, magnesium 2,4,5-trichlorobenzenesulfonate, strontium 2,4,5-trichlorobenzenesulfonate, sodium 2-chloro-4-cyanobenzenesulfonate, calcium 3-chloro-4-methylbenzenesulfonate, sodium 4-chloro-3-methylbenzenesulfonate, sodium 3,5-dichloro-2-methylbenzenesulfonate, sodium 3-(trifluoromethyl)-5-(ar-pentachlorobenzyl)benzenesulfonate, sodium 2-chloro-4-(trifluorovinyl)benzenesulfonate, sodium 4'-bromo-α, α'-dichlorostilbenesulfonate, potassium tetrakis(4-chlorophenyl)ethylene-3-sulfonate, sodium 4,2',3',4',5',6',4"-heptachlorotriphenylmethane-3-sulfonate, disodium 1,1,1-trichloro-2-(4'-cyanophenyl)-2-(4-chlorophenyl)ethanesulfonate, sodium 2,2-bis(4'-chlorophenyl)-hexafluoropropane-3'-sulfonate, lithium 9,10-dichloroanthracenesulfonate, sodium 1,3,6,8-tetrachloropyrene-4-sulfonate, sodium 2,3-dichlorobenzenesulfonate, sodium 2,3,4-trichlorobenzenesulfonate, sodium pentachlorobenzenesulfonate, sodium 2,3,5,6-tetrachlorobenzenesulfonate, sodium 2,3,4,5-tetrabromobenzenesulfonate, trisodium 2,4,6-trichlorobenzene-1,3,5-trisulfonate, p-fluorobenzene sulfonic acid, 2,3,4,5-tetrafluorobenzenesulfonic acid, pentafluorobenzenesulfonic acid, p-chlorobenzenesulfonic acid, 2,4-dichlorobenzenesulfonic acid, p-bromobenzenesulfonic acid, 2,5-dibromobenzenesulfonic acid, 2-bromo-4-chlorobenzenesulfonic acid, 2-chloro-4-bromobenzenesulfonic acid, 2-bromo-5-chlorobenzenesulfonic acid, 2-chloro-5-bromobenzenesulfonic acid, 2,3,4-trichlorobenzenesulfonic acid, 2,4,6-trichlorobenzenesulfonic acid, 2,3,4,5-tetrachlorobenzenesulfonic acid, 2,3,5,6-tetrachlorobenzenesulfonic acid, 2,3,4,6-tetrachlorobenzenesulfonic acid, pentachlorobenzenesulfonic acid, 1-chloronaphthalene-x-sulfonic acid, 1,x-dichloronaphthalene-y-sulfonic acid, 1-bromonaphthalene-x-sulfonic acid, 4,5-dichlorobenzene-1,3-disulfonic acid, and combinations thereof. In other embodiments, the organic salts may be sodium or calcium salts of oligomeric or polymeric sulfonic acids such as, but not limited to, sodium or calcium salts of poly(monochlorostyrene)sulfonic acid containing one sulfonate group per 5.4 phenyl rings.

In particular embodiments, the organic salt may be potassium diphenylsulfone sulfonate (KSS) and sodium trichlorobenzene sulfonate (STB), potassium perfluorobutane sulfonate (KPFBS), p-toluenesulfonic acid sodium salt (NaTS), poly(styrenesulfonic acid sodium salt) and similar salts, fluoroalkylsulfonamidate salts, potassium 2,4,5-trichlorobenzene, potassium-2,4,5-trichlorobenzenesulfonate, and combinations thereof. Quantities of such organic salts known to be useful in the polymer arts are known in the art, and any concentration of organic salt sufficient to provide flame resistance may be used in embodiments. For example, in certain embodiments, the organic salts may be provided at about 0.01 wt. % to about 1.0 wt. %.

In further embodiments, a co-additive may be provided along with the organic salts to improve, for example, clarity of the resulting polymer and/or processability. Examples of co-additives that provide such properties include, but are not limited to, octaphenylcyclotetrasiloxane, poly(methyl siloxane), poly(methylphenyl siloxane), halogenated organic additives such as tetrabromobenzene, tetrabromo BPA-polycarbonate, hexachlorobenzene, and hexabromobenzene, and biphenyls such as 2,2'-dichlorobiphenyl, 2,4'-dibromobiphenyl, 2,4'-dichlorobiphenyl, hexabromobiphenyl, octabromobiphenyl, decabromobiphenyl and halogenated diphenyl ethers, containing 2 to 10 halogen atoms. Generally, small quantities of such co-additives are necessary to produce the desired result. For example, in various embodiments, less than 1.0 wt. % or less than 0.5 wt. % of such co-additives may be provided in the polymer compositions.

In some embodiments, the polymer compositions of the invention may further include a secondary flame retardant, present in a minor amount, the polyphosphonate present in a major amount. A non-limiting, exemplary list of secondary flame retardants includes: PDBS-80 halogenated flame retardant, PDBS-80 being a homopolymer of dibromostyrene; FR-245 (tris(tribromophenoxy)triazine; Arichem KSS-FR, potassium 3-(phenylsulfonyl)benzenesulfonate; NOFIA HM1100 (polyphosphonate of undescribed composition); Fyrolflex SOL-DP (an aryl phosphate); and BC-58, a phenoxy-terminated carbonate oligomer of tetrabromobisphenol A, CAS Reg. Number [71342-77-3], sold by Chemtura.

In some embodiments, the polymer compositions of the invention may further include one or more anti-dripping agents. Anti-dripping agents are well known in the art, and any anti-dripping agent may be used in the compositions described herein. For example, in particular embodiments, the anti-dripping agent may be one or more fluorinated polyolefins such as polytetrafluoroethylene or a blend of polytetrafluoroethylene and styrene acrylonitrile copolymer (TSAN). In such embodiments, the polytetrafluoroethylene may be provided at a concentration of from about 0.001 wt. % to about 1.0 wt. %, although the skilled artisan may provide more or less anti-dripping agent to produce the desired activity.

In still other embodiments, the polymer compositions described above including one or more copolyphosphonates, one or more polycarbonates, and one or more organic salts and/or, in some embodiments, a silicone containing compound may further include an additional polymer or engineering plastic. Additional polymers that may be combined with the polymer compositions described herein include, but are not limited to, plastics, polyacrylonitriles, polystyrenes, polyamides, glass filled or non-glass filled polyamides, more specifically, PA 6, PA 6.6, PA 4.6, polyesters, glass filled or non-glass filled polyester, more specifically, polyethylene terephthalate (PET), polybutylene terephthalate (PBT), poly(trimethylene terephthalate), polyurethanes, polyureas, polyepoxys, polyimides, polyarylate, poly(arylene ether), polyethylene, polyethylene oxide, polyphenylene sulfide, polypropylene, polyphenylene oxide (PPO), poly(vinyl ester), polyvinyl chloride, bismaleimide polymer, polyanhydride, polyacrylonitrile butadiene styrenes (ABS), ABS/PCs, high-impact polystyrenes (HIPS), PPO/HIPS, liquid crystalline polymer, cellulose polymer, or combinations thereof. The additional polymer may be blended with the polymer using any mixing, blending, or compounding method known in the art such as, but not limited to, melt mixing. Engineering plastics as used herein include, both thermoplastics and thermosetting resins and may include, but are not limited to, epoxies, derived polymers, polyepoxies (e.g., polymers resulting from the reaction of one or more epoxy monomer or oligomer with one or more chain extender or curing agent such as a mono or multifunctional phenol, amine, benzoxazine, anhydride or combination thereof), benzoxazines, polyacrylates, polyacrylonitriles, polyesters, such as, poly(ethylene terephthalate), poly(trimethylene terephthalate), and poly(butylene terephthalate), unsaturated polyesters, polyamides, polystyrenes including high impact strength polystyrene, polyureas, polyurethanes, polyphosphonates, polyphosphates, poly(acrylonitrile butadiene styrene)s, polyimides, polyarylates, poly(arylene ether)s, polyethylenes, polypropylenes, polyphenylene sulfides, poly(vinyl ester)s, polyvinyl chlorides, bismaleimide polymers, polyanhydrides, liquid crystalline polymers, cellulose polymers, or any combination thereof (commercially available from, for example, Sabic Plastics, Pittsfield, Mass.; Rohm & Haas Co., Philadelphia, Pa.; Bayer Corp.-Polymers, Akron, Ohio; Reichold; DuPont; Huntsman LLC, West Deptford, N.J.; BASF Corp., Mount Olive, N.J.; Dow Chemical Co., Midland, Mich.; GE Plastics; DuPont; Bayer; DuPont; ExxonMobil Chemical Corp., Houston, Tex.; ExxonMobil.; Mobay Chemical Corp., Kansas City, Kans.; Goodyear Chemical, Akron, Ohio; BASF Corp.; 3M Corp., St. Paul, Minn.; Solutia, Inc., St. Louis, Mo.; DuPont; and Eastman Chemical Co., Kingsport, Tenn., respectively). In particular embodiments, the copoly(phosphonate carbonate)s of the invention may be combined with polyepoxies.

In other embodiments, the polymer compositions described above, may include one or more additional components or additives commonly used in the art, such as, for example, fillers, fibers, surfactants, organic binders, polymeric binders, crosslinking agents, coupling agents, aramid fibres, lubricants, mold release agents such as pentaerythritol tetrastearate, nucleating agents, anti-static agents such as conductive blacks, carbon fibers, carbon nanotubes, and organic antistatic agents such as polyalkylene ethers, alkylsulfonates, and polyamide-containing polymers, catalysts, colorants, inks, dyes, antioxidants, stabilizers, impact agents, flame retardants, and any combinations thereof. In such embodiments, the one or more additional components or additives may make up from about 0.001 wt. % to about 30 wt. %, about 0.05 wt. % to about 25 wt. %, about 0.5 wt. % to about 20 wt. %, about 1.0 wt. % to about 15 wt. %, or about 1.5 wt. % to about 10 wt. % based on the total composition.

In some embodiments, the polymer compositions described above can be used alone as an engineering polymer or as additives that are combined with other polymers to provide flame resistance without detracting from other important properties. Certain embodiments include articles of manufacture and coatings prepared from the polymer compositions of the invention alone or in combination with another polymer. In still other embodiments, engineering polymers of the polymer compositions may be combined with a reinforcement material such as, for example, glass, carbon, silicon carbide, organic fibers, and combinations thereof to produce composites having an advantageous combination of fire resistance and dimensional stability while maintaining high HDT near that of the unmodified engineering polymer.

The chemical formula of one specific exemplary composition, namely a poly(phosphonate-co-carbonate) is illustrated below as formula (VI): 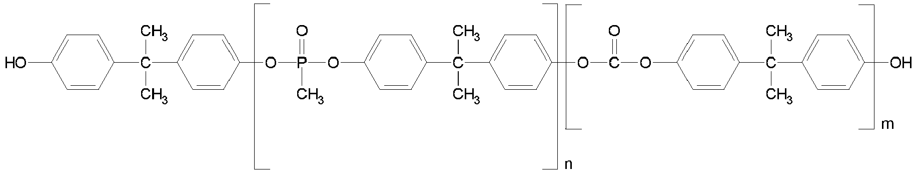 wherein n ranges from approximately 20 to 45% inclusive; and
wherein m ranges from approximately 80 to 55% inclusive; and
wherein m + n = 100%; and further wherein
a molecular weight of the poly(polyphosphonate-co-carbonate) ranges from about 10,000 g/mole to about 100,000 g/mole and having a polydispersity of from about 2 to 7 and preferably a single T_{g}.

More generically, the poly(phosphonate-co-carbonate) is illustrated below as formula (VII): 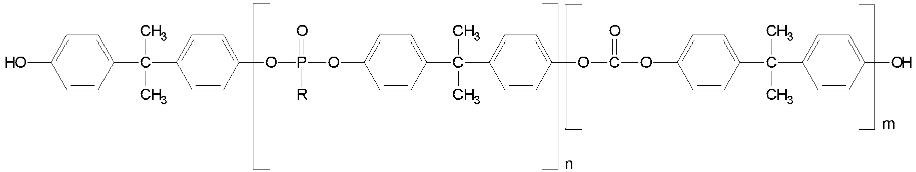 wherein n and m are as defined for formula (VI); and further
wherein R is selected from the group consisting of C₁₋₂₄ alkyl groups and C₅₋₄₀ cyclic groups.

Trilayer structural composites preferred in this invention can be formed in an extrusion process preferably employing a supercritical fluid, such as for example commercial extrusion processes by MuCell Extrusion, LLC ("MuCell"). In one example, the blended thermoplastics are injected with supercritical nitrogen or carbon dioxide during extrusion, in a controlled manner, to create specific cell structures (with, generally, uniform and controlled cell geometry) allowing certain physical properties to be satisfied. The main resulting characteristic is a lighter density, typically greater than 30% reduction, while maintaining physical characteristics similar to non-foamed systems. The flame retardant properties would satisfy strict aviation requirements.

Polymeric foaming may be effected by one of two different approaches: the addition of a chemical blowing agent or by the use of a physical blowing agent (e.g., N₂ or CO₂). Chemical blowing agents are generally organic compounds with a low molecular weight. This approach does not give good control of porosity and the resultant products often exhibit non-uniform cell structures. Supercritical fluid blowing agents are substances which create voids in a polymer in that both the pressure and temperature of the fluid are above their critical values. They have properties intermediate between those of gases and liquids. Supercritical CO₂ or N₂ is often used because they are non-toxic, non-flammable, chemically inert, and their supercritical conditions are easily reached with adequate pressure. Supercritical CO₂ is often used in polymer processing. For example, the special combination of gas-like viscosity and liquid-like density makes supercritical CO₂ a good solvent or plasticizer in applications such as microcellular foaming.

Another value of the supercritical CO₂ or supercritical N₂ foaming process is that both the quantity of supercritical gas dissolved and the pressure drop can be controlled by adjusting the operating conditions. Consequently, the expansion, size and density of pores can be fixed so as to obtain materials with a wide range of mechanical properties.

The process provides the capability of varying wall size thickness to foam core wall ratio; foam cell size; and foam cell density. For example, utilizing the process with the additive flame retardant may result in an average 33% reduction in weight, with up to a possible 42% reduction. Similarly, wall ratios are reduced to ∼10% (interior wall) / ∼80% (foam) / ∼10% (exterior wall) using the above process with the above composition. More generically, the thickness of the various layers range from ∼7-13% (interior wall) / ∼75-85% (foam) / ∼7-13% (exterior wall), the percentages of the three layers totaling 100%.

The composition can be utilized in a number of respects, including but not limited to the following: standard material alone used for aircraft, including but not limited to material plus a decorative laminate film, meeting flammability, smoke and toxicity ("FST") requirements for use in aircraft interiors; and multilayer thermoplastic sheet meeting FST requirements for use in aircraft interiors, where the material is one of several layers to meet the appropriate product requirements for aircraft interiors.

The base formulation will generally comprise a blended polycarbonate/polyphosphonate copolymer of high molecular weight, to which a miscible flame retardant additive (e.g., a polyphosphonate) may be added, in addition to perhaps other additives. The extruding process used to manufacture the base formulation is important and includes the foamed extrusion of copolymer phosphonates and the flame retardant and the resins and additives used including the use of Nitrogen (N₂) or Carbon Dioxide (CO₂) injection points coupled with thermoformability.

As a result of the supercritical extrusion process, a lightweight foamed sheet material is made from a polycarbonate/polyphosphonate copolymer compounded into a branched polycarbonate of high molecular weight. The foam layer is interposed between non-foamed skin layers

As known in the industry, OSU Heat Release (2-Minute Total) is the amount of heat energy evolved (kW · min/m²) and the OSU Heat Release Rate (Peak) is the rate of heat energy evolved (kW/m²) and represents the maximum heat release rate which occurs when the material is burning most intensely.

The OSU Ohio State University (OSU) heat release rate apparatus employs a modified (ASTM E906) standard. It has three (3) main sections: (A) a holding chamber which is a holding area prior to testing in which an injection mechanism slides through an outer door which is sealed and hinged; (B) an environmental chamber which contains radiant heating elements (e.g., globars), a reflector plate and diamond shaped mask with upper and lower pilot burners, air distributor plates (2), cold zone thermocouples (thermopile), two-part hinged insulated radiation door assembly with heat resistant viewing window; and (C) a pyramidal section which contains a chimney or exhaust stack with a cooling manifold which releases constant temperature air between two inner and outer cone sections, a baffle plate and a chimney (with hot zone thermocouples) to facilitate mixing of air as it exits the chimney.

### Examples

A series of trilayer laminate examples were prepared in accordance with the parameters identified in Table I using supercritical N₂. In the laminate, the middle layer was a foamed layer while the opposed exterior layers were not foamed. All layers incorporated the chemical composition illustrated in Formula (I) further wherein "m" and "n" are numbers such that the ratio of repeat units is ∼65% and ∼35% respectively. The samples were characterized pursuant to the criteria of Tables II & III.

A series of samples were prepared with various process and composition variations pursuant to the Table.

**Table I***

| | Die Gap (inch) | Nucleate | Speed (rpm) Foam/cap | Thickness (mm) | Density (g/cc) | Layers (volume) | Thermoform temp (°F) | Thermoform time (sec) |
|---|---|---|---|---|---|---|---|---|
| 2 | 0.010 | 3% | 16/5 | 1 | 0.78 | 10/80/10 | | |
| 3 | 0.010 | 9% | 16/5 | 1 | 0.75 | 10/80/10 | 485 | 40 |
| 4 | 0.010 | 9% | 16/5 | 1 | 0.75 | 10/80/10 | | |
| 5 | 0.010 | 9% | 16/10 | 1 | 0.77 | 25/50/25 | | |
| 6 | Open | 9% | 16/10 | 2 | 0.75 | | | |
| 7 | Open | 9% | 22/13 | 2 | 0.75 | | 485 | 45 |
| 8 | 0.060 | 9% | 28/15 | 3 | 0.82 | | 485 | 90 |
| 9 | 0.060 | 3% | 28/15 | 3 | 0.81 | | 485 | 90 |

| | | | | | | | | |
|---|---|---|---|---|---|---|---|---|
| * trilayer laminate using Formula (VI) under different synthetic conditions | | | | | | | | |

**Table II**

| | Units | Required to pass | PC* | PC* | PC* |
|---|---|---|---|---|---|
| Sp. Gravity | | | 0.81 | 0.86 | 0.90 |
| Areal Wt. | | | 10.45 | 12.87 | 24.20 |
| Tensile strength at yield (50 mm/min) | MPa | | 22.19 | 34.76 | 33.64 |
| Tensile modulus at yield (50 mm/min) | MPa | | 661 | 1164 | 1042 |
| Elongation at yield (50 mm/min) | % | | 13.65 | 6.76 | 7.04 |
| Elongation at break (50 mm/min) | % | | 13.79 | 24.05 | 11.72 |
| Maximum flexural load (1.27 mm/min) | MPa | | 62 | 71 | 64 |
| Flexural modulus (1.27 mm/min) | MPa | | 1926 | 2022 | 1956 |
| Gardner impact strength | in.lb. | | 28 | 64 | 192 |
| Vertical burn 60s (after flame) sec | Sec. | < 15 | 3.73 | 0 | 9.08 |
| Vertical burn 60s (drip time) sec | Sec. | < 5 | 0.59 | 0 | 4.96 |
| Vertical burn 60s (burn length) mm | mm | < 203 | 67 | 91 | 41 |
| OSU Heat Release (total) | kW min/m² | < 65 | 183.9 | 150.5 | 114.7 |
| OSU Heat Release (peak) | kW/m² | < 65 | 235.4 | 141.8 | 111.8 |
| Smoke density | | | 128.05 | 122.8 | 123.45 |
| Skin/Foam/Skin ratio (microscope) | | | 19/66/15 | 15/73/12 | 9/79/12 |
| Cell diameter (microscope) | | | 0.0727 | 0.1257 | 0.1788 |

| | | | | | |
|---|---|---|---|---|---|
| * Polycarbonate | | | | | |

**Table III**

| (2, 5, 7, 9 and 3, 6 are not in accordance with the invention) | | | | | | | | | | |
|---|---|---|---|---|---|---|---|---|---|---|
| | | | Sample #s per Table I | | | | | | | |
| | Unit | Pass # | 2 | 3 | 4 | 5 | 6 | 7 | 8 | 9 |
| Sp. Gravity | | | 0.83 | 0.74 | 0.76 | 0.82 | 0.76 | 0.76 | 0.89 | 0.88 |
| Areal Wt. | | | 25.62 | 21.70 | 21.58 | 22.61 | 46.07 | 45.51 | 66.29 | 66.49 |
| Tensile strength at yield (50 mm/min) | | | 32.2 | 31.6 | 30.53 | 36.51 | 31.55 | 31.61 | | |
| Tensile modulus at yield (50 mm/min) | MPa | | 788 | 756 | 1311 | 1035 | 759 | 8.1 | | |
| Elongation at yield (50 mm/min) | MPa | | 8.44 | 14.04 | 4.25 | 6.00 | 16.50 | 8.33 | | |
| Elongation at break (50 mm/min) | MPa | | 40.71 | 45.55 | 11.54 | 14.79 | 18.57 | 11.64 | | |
| Maximum flexural load (1.27 mm/min) | MPa | | 62.35 | 56.25 | 56.62 | 61.94 | 58.29 | 62.88 | 73.85 | 73.44 |
| Flexural modulus (1.27 mm/min) | MPa | | 2331 | 2080 | 2043 | 2252 | 1874 | 2005 | 2162 | |
| Gardner impact strength | in.lb. | | 20 | 20 | 20 | 22 | 80 | 88 | 200 | 144 |
| Vertical burn 60s (after flame) sec | Sec | < 15 | 2.96 | | 0.83 | 0 | | 1.42 | 4.71 | 2.33 |
| Vertical burn 60s (drip time) sec | Sec | < 5 | 0 | | 0 | 0 | | 0 | 0 | 0 |
| Vertical burn 60s (burn length) mm | mm | < 203 | 77 | | 87 | 75 | | 93 | 89 | 87 |
| OSU Heat Release (total) | kW min/m² | < 65 | 75.1 | | 55.7 | 62.9 | | 63.8 | 32.4 | 17.1 |
| OSU Heat Release (peak) | kW/m² | < 65 | 83.9 | | 64.2 | 82.3 | | 105.8 | 121 | 112.1 |
| Smoke density | | | | | 127.8 | | | 73.8 | 132.7 | |
| Skin/Foam/Sk in ratio (microscope) | | | 7/82/11 | 7/79/12 | 7/83/10 | 7/81/12 | 10/80/10 | 11/80/9 | 8/82/10 | 10/80/10 |
| Cell diameter (microscope) | | | 0.0967 | 0.0698 | 0.0577 | 0.0432 | 0.0707 | 0.0573 | 0.0674 | 0.1199 |

**Table IV*****

| | Units | Required to pass | Formula (VI) 3.7% P (47%)* | Formula (VIII)** - (10%)* | Formula (VIII)** + Formula (VI) 6.4% P (7.76%, 23.15%)* | Brominated PS + Formula (VI) 6.4% P (8.65%, 23.15%)* | Formula (VI) - 6.4% P |
|---|---|---|---|---|---|---|---|
| Vertical burn 60s (after flame) sec | Sec. | < 15 | | 0 | 2.96 | 0.41 | 0 |
| Vertical burn 60s (drip time) sec | Sec. | < 5 | | 2.59 | 2.32 | 0.92 | 2.05 |
| Vertical burn 60s (burn length) mm | mm | < 203 | | 43 | 39 | 64 | 111 |
| OSU Heat Release (total) | kW min/m² | < 65 | 37.4 | 26.6 | 28.1 | 29.7 | 31.8 |
| OSU Heat Release (peak) | kW/m² | < 65 | 127.8 | 152 | 165.1 | 184 | 80.7 |

| | | | | | | | |
|---|---|---|---|---|---|---|---|
| * loading level into branched PC *** monolayer formulation | | | | | | | |

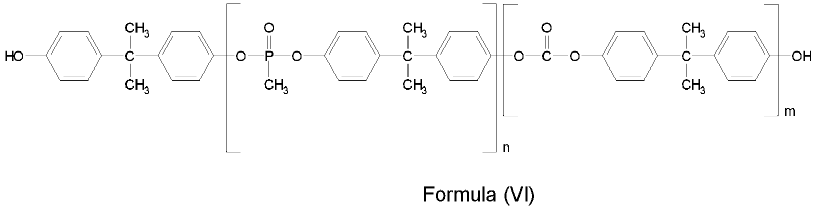

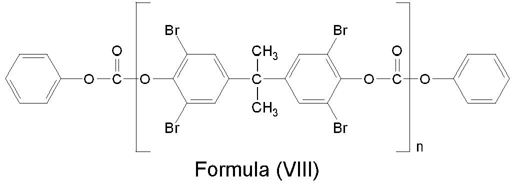

A comparison of the physical characteristics of a chemically blown trilayer laminate using Formula (VI) to that of a supercrically blown trilayer laminate using the same formulation is presented in Table V. Lower glass transition temperatures and lower melt temperatures are noted for the supercritically blown laminates as well as superior heat characteristics as evidenced by the OSU Heat Release, both total and peak.

**Table V**

| | Chemical Blown (middle layer) | | | Supercritical N₂ Blown (middle layer) | | | | | | | |
|---|---|---|---|---|---|---|---|---|---|---|---|
| | A | B | C | 2 | 3 | 4 | 5 | 6 | 7 | 8 | 9 |
| Skin / foam / skin ratio (%) | 19/66/15 | 15/73/12 | 7/79/12 | 7/82/11 | 7/79/12 | 7/83/10 | 7/81/12 | 10/80/10 | 11/80/9 | 8/82/10 | 10/80/10 |
| Cell diameter (mm) | 0.727 | 0.1257 | 0.1788 | 0.0967 | 0.0698 | 0.0577 | 0.0432 | 0.0707 | 0.0573 | 0.0674 | 0.1199 |
| Tensile strength at yield (50 mm/min) (MPa) | 22.19 | 34.76 | 33.64 | 32.2 | 31.6 | | | | | | |
| Tensile modulus at yield (50 mm/min) (MPa) | 661 | 1164 | 1042 | 788 | 756 | | | | | | |
| Elongation at yield (50 mm/min) (%) | 13.65 | 6.76 | 7.04 | 8.44 | 14.04 | | | | | | |
| Elongation at break (50 mm/min) (%) | 13.79 | 24.05 | 11.72 | 40.71 | 45.55 | | | | | | |
| Maximum load (1.27 mm/min) (MPa) | 62 | 71 | 64 | 62.35 | 56.25 | 56.62 | 61.94 | 58.29 | 62.88 | 73.85 | 73.44 |
| Flexural modulus (1.27 mm/min) (MPa) | 1926 | 2022 | 1956 | 2331 | 2080 | 2043 | 2252 | 1874 | 2005 | 2162 | |
| Tabor abrasion (g) | 0.0069 | 0.0187 | 0.0187 | 0.0045 | | | | 0.0166 | | 0.0077 | |
| DSC - glass transition temperature (°C) | 145.35 | 144.94 | 143.29 | 124.87 | | | | 126.59 | | | |
| DSC - melt temperature (°C) | 151.29 | 152.39 | 153.38 | 138.88 | | | | 144.84 | | 139.83 | |
| UV stability | 0.91 | 2.21 | 0.14 | 5 | | | | 2.83 | | 5.92 | |
| Heat stability (10 min @ 400°F) | 1.06 | 0.24 | 0.57 | 0.71 | | | | 1.59 | | 0.94 | |
| Heat stability (20 min @ 400°F) | 1.44 | 0.39 | 0.53 | 2.79 | | | | 3.89 | | 0.94 | |
| Heat stability (30 min @ 400°F) | 1.5 | 0.33 | 1.01 | 4.27 | | | | 2.23 | | 1.34 | |
| Heat stability (10 days @ 70°C) | 0.12 | 0.76 | 0.17 | 0.84 | | | | 1.18 | | 1.82 | |
| Vertical burn, 60 s (after flame) (sec) | 3.73 | | 9.08 | 2.96 | | 0.83 | | | 1.42 | 4.71 | 2.33 |
| Vertical burn, 60 s (drip time) (sec) | 0.59 | | 4.96 | | | | | | | | |
| Vertical burn 60 s (bum length) (mm) | 67 | 91 | 41 | 77 | | 87 | 75 | | 93 | 89 | 87 |
| OSU heat release (total) | 183.9 | 150.5 | 114.7 | 75.1 | | 55.7 | 62.9 | | 63.8 | 32.4 | 17.1 |
| OSU heat release (peak) | 235.4 | 141.8 | 111.8 | 83.9 | | 64.2 | 82.3 | | 105.8 | 121 | 112.1 |
| Smoke density | 128.05 | 122.8 | 123.45 | | | 127.8 | | | 73.8 | 132.7 | |

While the above experimental data has focused on the poly(phosphonate-co-carbonate) trilayer laminates, the invention is not limited to such. The invention does focus on the weight reduction which is possible using the trilayer laminates in which the middle layer is foamed. Other additives which are believed to be effective in the invention would include: decabromodiphenyl ethane; polymeric compounds with high bromine(halogen) content; phenoxy-terminated carbonate oligomers of tetrabromobisphenol-A; triaryl isopropylated phosphates; polycarbonate sulfonated salts and 2,4,6 tribromoanisole.

As illustrated in Tables II & III, not all combinations of synthetic combinations met the "pass" criteria, particularly the OSU Heat Release (total) value and of those samples which did, experiment 4 had the most weight reduction. Similarly, for monolayer test combinations, brominated polystyrene and formula (VII) did not meet the test criteria for OSU heat release peak, but those associated with differing amounts of phosphorus did (∼3.7% & ∼6.4%).

Embodiments of the invention described herein, may include a polymer comprising at least one phosphonate oligomer or polyphosphonate and one or more polyester or polycarbonate covalently linked to the at least one phosphonate oligomer or polyphosphonate to form a poly(block-phosphonato-ester) or polyblock-phosphonato-cabonate). In some embodiments, at least one phosphonate oligomer or polyphosphonate and one or more polyester or polycarbonate may be linked to one another by a transesterification or polycondensation, and in certain embodiments, the poly(block-phosphonato-ester) and/or poly(block-phosphonato-cabonate) may have a single glass transition temperature (T_{g}).

The phosphonate oligomer or polyphosphonate, of embodiments of the invention, may have a solution viscosity ηᵣₑₗ of from about 1.03 to greater than about 1.35 and may have a T_{g} of from about 28°C to about 107°C). In some embodiments the phosphonate oligomer or polyphosphonate may be branched or linear and may be prepared with up to about 50 mol % branching agent. In other embodiments, the phosphonate oligomer of polyphosphonate may have a molecular weight (Mₙ) of from about 2,000 g/mol to about 35,000 g/mol, and, in certain embodiments, the phosphonate oligomer or polyphosphonate may be prepared from at least a stoichiometrically imbalanced mixture of a phosphoric acid diaryl ester and a bisphenol.

The polyester or polycarbonate of embodiments of the invention may be an aromatic and aliphatic polyesters, aromatic and aliphatic polycarbonates, polyalkylene terephthalates, polyethylene terephthalate, polyalkylene naphthalates, polyethylene naphthalate, polybutylene terephthalate, polycaprolactone, poly(butylene adipate), poly(hexamethylene sebacate), aromatic and aliphatic copolyesters and combinations thereof.

In embodiments of the invention, the block polymer described above may further comprise a second polymer which may be any polymer or plastic such as, but not limited to, plastics, polycarbonates

(PCs), polyacrylonitriles, polystyrenes, polyamides, glass-filled or non-glass-filled polyamides, more specifically, PA 6, PA 6.6, PA 4.6, polyesters, glass-filled or non-glass-filled polyester, more specifically, polyethylene terephthalate (PET), polybutylene terephthalate (PBT), polyurethanes, polyureas, polyepoxys, polyimides, polyarylate, poly(arylene ether), polyethylene, polyethylene oxide, polyphenylene sulfide, polypropylene, polyphenylene oxide (PPO), poly(vinyl ester), polyvinyl chloride, bismaleimide polymer, polyanhydride, polyacrylonitrile butadiene styrenes (ABS), AMS/PCs, high-impact polystyrenes (HIPS), PPO/HIPS, liquid crystalline polymer, cellulose polymer, or combinations thereof. The second polymer may be blended with the polymer using a mixing, blending or compounding method known in the art such as, but not limited to, melt mixing.

The polyphosphonate oligomer or polyphosphonate blocks in the block polymers of the invention may be from at least about 20 wt % to about 99.5 wt % relative to the total poly(block-phosphonato-ester) and/or poly(block-phosphonato-carbonate), and in some embodiments, the phosphonate oligomer or polyphosphonate blocks may be from at least about 0.5 wt % to about 20 wt % relative to the total weight of the poly(block-phosphonato-ester) and/or poly(block-phosphonato-cabonate).

The invention further includes polymer systems of which a non-limiting, non-exhaustive list would include: polyphenylene oxides and ethers, silicone derived polymers and other polymers which show inherent flame retardant properties, but do not pass aviation requirements in neat form.

It is recognized that any of the formulations disclosed herein may further comprise decorative laminate layers consisting of one or more layers.

It is further recognized that the end-use application of the copolyphosphonate will often influence the final characteristics of the product. Taking the aviation industry, the wall stock ratio per application (%thickness) is the following: tray tables - ∼8/∼84/∼8; seat support/aesthetic only - ∼8/∼84/∼8; seat backs, including electronic interface area - ∼12/∼76/∼12; all other areas - ∼10/∼80/∼10.

As for the thickness of the trilayer laminate, the range of wall stock thicknesses contemplates about 0.040" at one lower end, while 0.500" appears to be a maximum which is practical for interior surfaces.

It is of course recognized that the ratio of the thicknesses of each laminate layer as well as the overall thickness of the laminate will be dependent upon the required performance characteristics of the end-use in addition to the specific polymers employed in each of the layers.

## Claims

1. A laminate extruded composition comprising:
a pair of opposed top and bottom non-foamed layers;
at least one interposed middle foamed layer, the middle foamed layer foamed using supercritical fluids;
each of said layers comprising a flame retardant copolyphosphonate, the copolyphosphonate having a weight average molecular weight of between 10,000 g/mole to 100,000 g/mole (measured with GPC), the copolyphosphonate having a polydispersity of between 2 to 7, the copolyphosphonate having a single glass transition temperature;
a percentage ratio of the at least three layers ranging from 7-13% / 75-85% / 7-13%, the at least three layers totaling 100%, a total thickness of the three layers ranging from 1.016mm to 12.7mm (0.040" to 0.500"); and
the laminate having an OSU Heat Release Total value of < 65 kW min/m² and an OSU Heat Release Peak value of < 65 kW/m² (measured with ASTM E906).

2. The laminate extruded composition of claim 1 wherein
the copolyphosphonate is selected from the group consisting of copoly(phosphonate carbonates) and copoly(phosphonate esters).

3. The laminate extruded composition of claim 2 wherein
the copolyphosphonate is selected from the group consisting of block copoly(phosphonate carbonate(s)), random copoly(phosphonate carbonates), block copoly(phosphonate esters) and random copoly(phosphonate esters).

4. The laminate extruded composition of claim 3 wherein
the polycarbonate block of the copolyphosphonate is a branched polycarbonate.

5. The laminate extruded composition of claim 3 wherein
the polycarbonate block of the copolyphosphonate is a linear polycarbonate.

6. The laminate extruded composition of claim 1 which further comprises:
at least one additional polymer selected from the group consisting of polyacrylonitriles, polystyrenes, polyamides, polyethylene terephthalate, polybutylene terephthalate, poly(trimethylene terephthalate), polyurethanes, polyureas, polyepoxys, polyimides, polyarylate, poly(arylene ether), polyethylene, polyethylene oxide, polyphenylene sulfide, polypropylene, polyphenylene oxide, poly(vinyl ester), polyvinyl chloride, bismaleimide polymer, polyanhydride, polyacrylonitrile butadiene styrenes, ABS/PCs, high-impact polystyrenes, PPO/HIPS, liquid crystalline polymers, cellulose polymers, and combinations thereof.

7. The laminate extruded composition of claim 3 wherein
the copolyphosphonate is illustrated below as formula (VII): 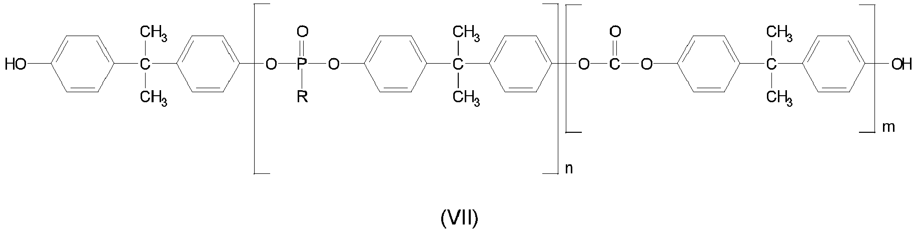 wherein n ranges from 20 to 45% inclusive;
wherein m ranges from 80 to 55% inclusive; and
wherein m + n = 100%; and further wherein
wherein R is selected from the group consisting of C₁₋₂₄ alkyl groups and C₅₋₄₀ cyclic groups.

8. The laminate extruded composition of claim 7 wherein
the copolyphosphonate is illustrated below as formula (VI):

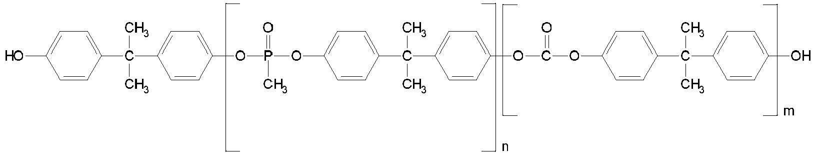

9. The laminate extruded composition of claim 1 which further comprises at least one organic salt, the organic salt selected from the group consisting of
sodium 2,5-difluorobenzenesulfonate, sodium 2,4,5-tribromobenzenesulfonate, sodium p-iodobenzenesulfonate, sodium 2,4 dibromo 5 fluorobenzenesulfonate, calcium 2,5-dichlorobenzenesulfonate, disodium 2,5 dichlorobenzene-1,3-disulfonate, sodium 4,4'-dibromobiphenyl-3-sulfonate, disodium 1,4 dichloronaphthalene-x,y-di-sulfonate, disodium 2,2 dichloro 1,1 bis(4' chloro phenyl)ethylene-3',3"-disulfonate, sodium 2,4 dinitrobenzenesulfonate, calcium 2-chloro-5-nitrobenzenesulfonate, calcium 3 (trifluoromethyl)benzenesulfonate, sodium 3-bromo-5-(trifluoromethyl)benzenesulfonate, lithium 2,4,5-trichlorobenzenesulfonate, lithium p-bromobenzenesulfonate, barium 2,4,5 trichlorobenzenesulfonate, potassium 4-chloro-3-nitrobenzenesulfonate, magnesium 2,4,5 trichlorobenzenesulfonate, strontium 2,4,5-trichlorobenzenesulfonate, sodium 2 chloro 4-cyanobenzenesulfonate, calcium 3-chloro-4-methylbenzenesulfonate, sodium 4 chloro-3-methylbenzenesulfonate, sodium 3,5-dichloro-2-methylbenzenesulfonate, sodium 3 (trifluoromethyl)-5-(ar-pentachlorobenzyl)benzenesulfonate, sodium 2 chloro 4 (trifluorovinyl)benzenesulfonate, sodium 4'-bromo-α, α'-dichlorostilbenesulfonate, potassium tetrakis(4-chlorophenyl)ethylene-3-sulfonate, sodium 4,2',3',4',5',6',4" heptachlorotriphenylmethane-3-sulfonate, disodium 1,1,1 trichloro 2 (4' cyanophenyl)-2-(4-chlorophenyl)ethanesulfonate, sodium 2,2 bis(4' chlorophenyl)-hexafluoropropane-3'-sulfonate, lithium 9,10 dichloroanthracenesulfonate, sodium 1,3,6,8-tetrachloropyrene-4-sulfonate, sodium 2,3 dichlorobenzenesulfonate, sodium 2,3,4-trichlorobenzenesulfonate, sodium pentachlorobenzenesulfonate, sodium 2,3,5,6-tetrachlorobenzenesulfonate, sodium 2,3,4,5 tetrabromobenzenesulfonate, trisodium 2,4,6-trichlorobenzene-1,3,5-trisulfonate, p-fluorobenzene sulfonic acid, 2,3,4,5-tetrafluorobenzenesulfonic acid, pentafluorobenzenesulfonic acid, p-chlorobenzenesulfonic acid, 2,4-dichlorobenzenesulfonic acid, p-bromobenzenesulfonic acid, 2,5 dibromobenzenesulfonic acid, 2-bromo-4-chlorobenzenesulfonic acid, 2 chloro 4 bromobenzenesulfonic acid, 2-bromo-5-chlorobenzenesulfonic acid, 2 chloro 5 bromobenzenesulfonic acid, 2,3,4-trichlorobenzenesulfonic acid, 2,4,6 trichlorobenzenesulfonic acid, 2,3,4,5-tetrachlorobenzenesulfonic acid, 2,3,5,6 tetrachlorobenzenesulfonic acid, 2,3,4,6-tetrachlorobenzenesulfonic acid, pentachlorobenzenesulfonic acid, 1-chloronaphthalene-x-sulfonic acid, 1,x dichloronaphthalene y sulfonic acid, 1-bromonaphthalene-x-sulfonic acid, 4,5 dichlorobenzene 1,3 disulfonic acid, potassium diphenylsulfone sulfonate, sodium trichlorobenzene sulfonate, potassium perfluorobutane sulfonate, p-toluenesulfonic acid sodium salt, poly(styrenesulfonic acid sodium salt) and similar salts, fluoroalkylsulfonamidate salts, potassium 2,4,5-trichlorobenzene, potassium 2,4,5 trichlorobenzenesulfonate, and combinations thereof.

10. The laminate extruded composition of claim 1 which further comprises at least one anti-dripping agent, the anti-dripping agent selected from the group consisting of
fluorinated polyolefins and a blend of polytetrafluoroethylene and styrene acrylonitrile copolymer.

11. The laminate extruded composition of claim 1 which further comprises at least one brominated agent present in quantities less than 1 wt.%.

12. The laminate extruded composition of claim 1 which is thermoformed into a molded shape.

13. A process to synthesize a lightweight and flame retardant laminate having at least an opposed pair of top and bottom non-foamed layers and at least one interposed middle foamed layer, comprising the steps of:
extruding the opposed pair of top and bottom non-foamed layers;
simultaneously extruding at least one interposed middle foamed layer using supercritical fluid as a blowing agent;
thermoforming the extruded laminate into a molded shape;
each of said layers comprising a flame retardant copolyphosphonate, the copolyphosphonate having a weight average molecular weight of between 10,000 g/mole to 100,000 g/mole (measured with GPC), the copolyphosphonate having a polydispersity of between 2 to 7, the copolyphosphonate having a single glass transition temperature;
a percentage ratio of the at least three layers ranging from 7-13% / 75-85% / 7-13%, the at least three layers totaling 100%; and
the laminate having an OSU Heat Release Total value of < 65 kW min/m² and an OSU Heat Release Peak value of < 150 kW/m² (measured with ASTM E906).

14. The product of the process of claim 13.

15. The process of claim 13 which further comprises:
the step of adding at least one organic salt, the organic salt selected from the group consisting of
sodium 2,5-difluorobenzenesulfonate, sodium 2,4,5-tribromobenzenesulfonate, sodium p-iodobenzenesulfonate, sodium 2,4 dibromo 5 fluorobenzenesulfonate, calcium 2,5-dichlorobenzenesulfonate, disodium 2,5 dichlorobenzene-1,3-disulfonate, sodium 4,4'-dibromobiphenyl-3-sulfonate, disodium 1,4 dichloronaphthalene-x,y-di-sulfonate, disodium 2,2 dichloro 1,1 bis(4' chloro phenyl)ethylene-3',3"-disulfonate, sodium 2,4 dinitrobenzenesulfonate, calcium 2-chloro-5-nitrobenzenesulfonate, calcium 3 (trifluoromethyl)benzenesulfonate, sodium 3-bromo-5-(trifluoromethyl)benzenesulfonate, lithium 2,4,5-trichlorobenzenesulfonate, lithium p-bromobenzenesulfonate, barium 2,4,5 trichlorobenzenesulfonate, potassium 4-chloro-3-nitrobenzenesulfonate, magnesium 2,4,5 trichlorobenzenesulfonate, strontium 2,4,5-trichlorobenzenesulfonate, sodium 2 chloro 4-cyanobenzenesulfonate, calcium 3-chloro-4-methylbenzenesulfonate, sodium 4 chloro-3-methylbenzenesulfonate, sodium 3,5-dichloro-2-methylbenzenesulfonate, sodium 3 (trifluoromethyl)-5-(ar-pentachlorobenzyl)benzenesulfonate, sodium 2 chloro 4 (trifluorovinyl)benzenesulfonate, sodium 4'-bromo-α, α'-dichlorostilbenesulfonate, potassium tetrakis(4-chlorophenyl)ethylene-3-sulfonate, sodium 4,2',3',4',5',6',4" heptachlorotriphenylmethane-3-sulfonate, disodium 1,1,1 trichloro 2 (4' cyanophenyl)-2-(4-chlorophenyl)ethanesulfonate, sodium 2,2 bis(4' chlorophenyl)-hexafluoropropane-3'-sulfonate, lithium 9,10 dichloroanthracenesulfonate, sodium 1,3,6,8-tetrachloropyrene-4-sulfonate, sodium 2,3 dichlorobenzenesulfonate, sodium 2,3,4-trichlorobenzenesulfonate, sodium pentachlorobenzenesulfonate, sodium 2,3,5,6-tetrachlorobenzenesulfonate, sodium 2,3,4,5 tetrabromobenzenesulfonate, trisodium 2,4,6-trichlorobenzene-1,3,5-trisulfonate, p-fluorobenzene sulfonic acid, 2,3,4,5-tetrafluorobenzenesulfonic acid, pentafluorobenzenesulfonic acid, p-chlorobenzenesulfonic acid, 2,4-dichlorobenzenesulfonic acid, p-bromobenzenesulfonic acid, 2,5 dibromobenzenesulfonic acid, 2-bromo-4-chlorobenzenesulfonic acid, 2 chloro 4 bromobenzenesulfonic acid, 2-bromo-5-chlorobenzenesulfonic acid, 2 chloro 5 bromobenzenesulfonic acid, 2,3,4-trichlorobenzenesulfonic acid, 2,4,6 trichlorobenzenesulfonic acid, 2,3,4,5-tetrachlorobenzenesulfonic acid, 2,3,5,6 tetrachlorobenzenesulfonic acid, 2,3,4,6-tetrachlorobenzenesulfonic acid, pentachlorobenzenesulfonic acid, 1-chloronaphthalene-x-sulfonic acid, 1,x dichloronaphthalene y sulfonic acid, 1-bromonaphthalene-x-sulfonic acid, 4,5 dichlorobenzene 1,3 disulfonic acid, potassium diphenylsulfone sulfonate, sodium trichlorobenzene sulfonate, potassium perfluorobutane sulfonate, p-toluenesulfonic acid sodium salt, poly(styrenesulfonic acid sodium salt) and similar salts, fluoroalkylsulfonamidate salts, potassium 2,4,5-trichlorobenzene, potassium 2,4,5 trichlorobenzenesulfonate, and combinations thereof, and
the step of adding at least one anti-dripping agent, the anti-dripping agent selected from the group consisting of fluorinated polyolefins and a blend of polytetrafluoroethylene and styrene acrylonitrile copolymer.

## Patentansprüche

1. Als Laminat extrudierte Zusammensetzung, die Folgendes umfasst:
ein Paar von entgegengesetzten, nicht verschäumten Ober- und Unterschichten;
mindestens eine dazwischen liegende, verschäumte Mittelschicht, wobei die verschäumte Mittelschicht unter Verwendung überkritischer Fluide verschäumt wird;
wobei jede der Schichten ein Copolyphosphonat als Flammschutzmittel umfasst, das Copolyphosphonat ein gewichtsmittleres Molekulargewicht zwischen 10.000 g/mol bis 100.000 g/mol (gemessen mit GPC) aufweist, wobei das Copolyphosphonat eine Polydispersität zwischen 2 bis 7 aufweist, das Copolyphosphonat eine einzige Glasübergangstemperatur aufweist;
wobei ein prozentuales Verhältnis von den mindestens drei Schichten im Bereich von 7-13 % / 75-85 % / 7-13 % liegt, die mindestens drei Schichten insgesamt 100 % ergeben, eine Gesamtdicke der drei Schichten im Bereich von 1,016mm bis 12,7 mm (0,040" bis 0,500") liegt; und
wobei das Laminat einen Gesamtwert der OSU-Wärmefreisetzung von < 65 kW min/m² und einen Spitzenwert der OSU-Wärmefreisetzung von < 65 kW/m² aufweist (gemessen gemäß ASTM E906).

2. Als Laminat extrudierte Zusammensetzung nach Anspruch 1, wobei
das Copolyphosphonat aus der Gruppe bestehend aus Copoly(phosphonatcarbonaten) und Copoly(phosphonatestern) ausgewählt ist.

3. Als Laminat extrudierte Zusammensetzung nach Anspruch 2, wobei
das Copolyphosphonat aus der Gruppe bestehend aus Blockcopoly(phosphonatcarbonat(en)), statistisch aufgebauten Copoly(phosphonatcarbonaten), Blockcopoly(phosphonatestern) und statistisch aufgebauten Copoly(phosphonatestern) ausgewählt ist.

4. Als Laminat extrudierte Zusammensetzung nach Anspruch 3, wobei
es sich bei dem Polycarbonatblock des Copolyphosphonats um ein verzweigtes Polycarbonat handelt.

5. Als Laminat extrudierte Zusammensetzung nach Anspruch 3, wobei
es sich bei dem Polycarbonatblock des Copolyphosphonats um ein lineares Polycarbonat handelt.

6. Als Laminat extrudierte Zusammensetzung nach Anspruch 1, die ferner Folgendes umfasst:
mindestens ein zusätzliches Polymer, das aus der Gruppe bestehend aus Polyacrylnitrilen, Polystyrolen, Polyamiden, Polyethylenterephthalat, Polybutylenterephthalat, Poly(trimethylenterephthalat), Polyurethanen, Polyharnstoffen, Polyepoxiden, Polyimiden, Polyarylat, Poly(arylenether), Polyethylen, Polyethylenoxid, Polyphenylensulfid, Polypropylen, Polyphenylenoxid, Poly(vinylester), Polyvinylchlorid, Bismaleimidpolymer, Polyanhydrid, Polyacrylnitril-butadien-styrolen, ABS/PCs, schlagzähen Polystyrolen, PPO/HIPS, flüssigkristallinen Polymeren, Cellulosepolymeren und Kombinationen davon ausgewählt ist.

7. Als Laminat extrudierte Zusammensetzung nach Anspruch 3, wobei
das Copolyphosphonat nachstehend in Form der Formel (VII) dargestellt ist: 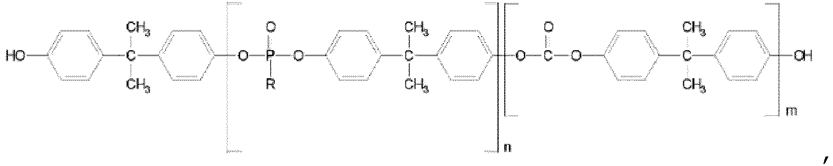 wobei n 20 bis inklusive 45 % beträgt;
wobei m 80 bis inklusive 55% beträgt; und
wobei m + n = 100 %; und wobei ferner
R aus der Gruppe bestehend aus C₁₋₂₄-Alkylgruppen und cyclischen C₅₋₄₀-Gruppen ausgewählt ist.

8. Als Laminat extrudierte Zusammensetzung nach Anspruch 7, wobei
das Copolyphosphonat nachstehend in Form der Formel (VI) dargestellt ist:

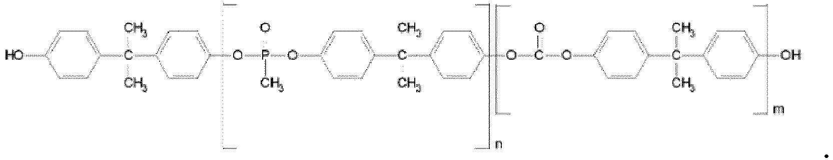

9. Als Laminat extrudierte Zusammensetzung nach Anspruch 1, die ferner mindestens ein organisches Salz umfasst, wobei das organische Salz aus der Gruppe bestehend aus
Natrium-2,5-difluorbenzolsulfonat, Natrium-2,4,5-tribrombenzolsulfonat, Natrium-p-iodbenzolsulfonat, Natrium-2,4-dibrom-5-fluorbenzolsulfonat, Calcium-2,5-dichlorbenzolsulfonat, Dinatrium-2,5-dichlorbenzol-1,3-disulfonat, Natrium-4,4'-dibrombiphenyl-3-sulfonat, Dinatrium-1,4-dichlornaphthalin-x,y-di-sulfonat, Dinatrium-2,2-dichlor-1,1-bis-(4'-chlorphenyl)ethylen-3',3"-disulfonat, Natrium-2,4-dinitrobenzolsulfonat, Calcium-2-chlor-5-nitrobenzolsulfonat, Calcium-3-(trifluormethyl)benzolsulfonat, Natrium-3-brom-5-(trifluormethyl)benzolsulfonat, Lithium-2,4,5-trichlorbenzolsulfonat, Lithium-p-brombenzolsulfonat, Barium-2,4,5-trichlorbenzolsulfonat, Kalium-4-chlor-3-nitrobenzolsulfonat, Magnesium-2,4,5-trichlorbenzolsulfonat, Strontium-2,4,5-trichlorbenzolsulfonat, Natrium-2-chlor-4-cyanobenzolsulfonat, Calcium-3-chlor-4-methylbenzolsulfonat, Natrium-4-chlor-3-methylbenzolsulfonat, Natrium-3,5-dichlor-2-methylbenzolsulfonat, Natrium-3-(trifluormethyl)-5-(ar-pentachlorbenzyl)benzolsulfonat, Natrium-2-chlor-4-(trifluorvinyl)benzolsulfonat, Natrium-4'-brom-a,a'-dichlorstilbensulfonat, Kaliumtetrakis-(4-chlorphenyl)ethylen-3-sulfonat, Natrium-4,2',3',4',5',6',4"-heptachlortriphenylmethan-3-sulfonat, Dinatrium-1,1,1-trichlor-2-(4'-cyanophenyl)-2-(4-chlorphenyl)ethansulfonat, Natrium-2,2-bis-(4'-chlorphenyl)-hexafluorpropan-3'-sulfonat, Lithium-9,10-dichloranthracensulfonat, Natrium-1,3,6,8-tetrachlorpyren-4-sulfonat, Natrium-2,3-dichlorbenzolsulfonat, Natrium-2,3,4-trichlorbenzolsulfonat, Natriumpentachlorbenzolsulfonat, Natrium-2,3,5,6-tetrachlorbenzolsulfonat, Natrium-2,3,4,5-tetrabrombenzolsulfonat, Trinatrium-2,4,6-trichlorbenzol-1,3,5-trisulfonat, p-Fluorbenzolsulfonsäure, 2,3,4,5-Tetrafluorbenzolsulfonsäure, Pentafluorbenzolsulfonsäure, p-Chlorbenzolsulfonsäure, 2,4-Dichlorbenzolsulfonsäure, p-Brombenzolsulfonsäure 2,5-Dibrombenzolsulfonsäure, 2-Brom-4-chlorbenzolsulfonsäure, 2-Chlor-4-brombenzolsulfonsäure, 2-Brom-5-chlorbenzolsulfonsäure, 2-Chlor-5-brombenzolsulfonsäure, 2,3,4-Trichlorbenzolsulfonsäure, 2,4,6-Trichlorbenzolsulfonsäure, 2,3,4,5-Tetrachlorbenzolsulfonsäure, 2,3,5,6-Tetrachlorbenzolsulfonsäure, 2,3,4,6-Tetrachlorbenzolsulfonsäure, Pentachlorbenzolsulfonsäure, 1-Chlornaphthalin-x-sulfonsäure, 1,x-Dichlornaphthalin-y-sulfonsäure, 1-Bromnaphthalin-x-sulfonsäure, 4,5-Dichlorbenzol-1,3-disulfonsäure, Kaliumdiphenylsulfonsulfonat, Natriumtrichlorbenzolsulfonat, Kaliumperfluorbutansulfonat, p-Toluolsulfonsäure-Natriumsalz, Poly(styrolsulfonsäure-Natriumsalz) und ähnlichen Salzen, Fluoralkylsulfonamidatsalzen, Kalium-2,4,5-trichlorbenzol, Kalium-2,4,5-trichlorbenzolsulfonat und Kombinationen davon ausgewählt ist.

10. Als Laminat extrudierte Zusammensetzung nach Anspruch 1, die ferner mindestens ein Antitropfmittel umfasst, wobei das Antitropfmittel aus der Gruppe bestehend aus
fluorierten Polyolefinen und einer Mischung von Polytetrafluorethylen und Styrol-Acrylnitril-Copolymer ausgewählt ist.

11. Als Laminat extrudierte Zusammensetzung nach Anspruch 1, die ferner Folgendes umfasst:
mindestens ein bromiertes Mittel, das in Mengen von weniger als 1 Gew.-% vorliegt.

12. Als Laminat extrudierte Zusammensetzung nach Anspruch 1, die
zu einem geformten Körper thermogeformt wird.

13. Verfahren zur Synthese eines leichten und flammhemmenden Laminats mit einem Paar von entgegengesetzten, nicht verschäumten Ober- und Unterschichten und mindestens einer dazwischen liegenden, verschäumten Mittelschicht, das die folgenden Schritte umfasst:
Extrudieren des entgegengesetzten Paars von nicht verschäumten Ober- und Unterschichten;
gleichzeitiges Extrudieren von mindestens einer dazwischen liegenden, verschäumten Mittelschicht unter Verwendung von überkritischem Fluid als Treibmittel;
Thermoformen des extrudierten Laminats zu einem geformten Körper;
wobei jede der Schichten ein Copolyphosphonat als Flammschutzmittel umfasst, wobei das Copolyphosphonat ein gewichtsmittleres Molekulargewicht zwischen 10.000 g/mol bis 100.000 g/mol (gemessen mit GPC) aufweist, wobei das Copolyphosphonat eine Polydispersität zwischen 2 bis 7 aufweist, wobei das Copolyphosphonat eine einzige Glasübergangstemperatur aufweist;
wobei ein prozentuales Verhältnis von den mindestens drei Schichten im Bereich von 7-13 % / 75-85 % / 7-13 % liegt, wobei die mindestens drei Schichten insgesamt 100 % ergeben; und
wobei das Laminat einen Gesamtwert der OSU-Wärmefreisetzung von < 65 kW min/m² und einen Spitzenwert der OSU-Wärmefreisetzung von < 150 kW/m² aufweist (gemessen gemäß ASTM E906).

14. Produkt aus dem Verfahren nach Anspruch 13.

15. Verfahren nach Anspruch 13, das ferner Folgendes umfasst:
den Schritt des Zugebens von mindestens einem organischen Salz, wobei das organische Salz aus der Gruppe bestehend aus
Natrium-2,5-difluorbenzolsulfonat, Natrium-2,4,5-tribrombenzolsulfonat, Natrium-p-iodbenzolsulfonat, Natrium-2,4-dibrom-5-fluorbenzolsulfonat, Calcium-2,5-dichlorbenzolsulfonat, Dinatrium-2,5-dichlorbenzol-1,3-disulfonat, Natrium-4,4'-dibrombiphenyl-3-sulfonat, Dinatrium-1,4-dichlornaphthalin-x,y-di-sulfonat, Dinatrium-2,2-dichlor-1,1-bis(4'-chlorphenyl)ethylen-3',3"-disulfonat, Natrium-2,4-dinitrobenzolsulfonat, Calcium-2-chlor-5-nitrobenzolsulfonat, Calcium-3-(trifluormethyl)benzolsulfonat, Natrium-3-brom-5-(trifluormethyl)benzolsulfonat, Lithium-2,4,5-trichlorbenzolsulfonat, Lithium-p-brombenzolsulfonat, Barium-2,4,5-trichlorbenzolsulfonat, Kalium-4-chlor-3-nitrobenzolsulfonat, Magnesium-2,4,5-trichlorbenzolsulfonat, Strontium-2,4,5-trichlorbenzolsulfonat, Natrium-2-chlor-4-cyanobenzolsulfonat, Calcium-3-chlor-4-methylbenzolsulfonat, Natrium-4-chlor-3-methylbenzolsulfonat, Natrium-3,5-dichlor-2-methylbenzolsulfonat, Natrium-3-(trifluormethyl)-5-(ar-pentachlorbenzyl)benzolsulfonat, Natrium-2-chlor-4-(trifluorvinyl)benzolsulfonat, Natrium-4'-brom-a,a'-dichlorstilbensulfonat, Kaliumtetrakis-(4-chlorphenyl)ethylen-3-sulfonat, Natrium-4,2',3',4',5',6',4"-heptachlortriphenylmethan-3-sulfonat, Dinatrium-1,1,1-trichlor-2-(4'-cyanophenyl)-2-(4-chlorphenyl)ethansulfonat, Natrium-2,2-bis-(4'-chlorphenyl)-hexafluorpropan-3'-sulfonat, Lithium-9,10-dichloranthracensulfonat, Natrium-1,3,6,8-tetrachlorpyren-4-sulfonat, Natrium-2,3-dichlorbenzolsulfonat, Natrium-2,3,4-trichlorbenzolsulfonat, Natriumpentachlorbenzolsulfonat, Natrium-2,3,5,6-tetrachlorbenzolsulfonat, Natrium-2,3,4,5-tetrabrombenzolsulfonat, Trinatrium-2,4,6-trichlorbenzol-1,3,5-trisulfonat, p-Fluorbenzolsulfonsäure, 2,3,4,5-Tetrafluorbenzolsulfonsäure, Pentafluorbenzolsulfonsäure, p-Chlorbenzolsulfonsäure, 2,4-Dichlorbenzolsulfonsäure, p-Brombenzolsulfonsäure 2,5-Dibrombenzolsulfonsäure, 2-Brom-4-chlorbenzolsulfonsäure, 2-Chlor-4-brombenzolsulfonsäure, 2-Brom-5-chlorbenzolsulfonsäure, 2-Chlor-5-brombenzolsulfonsäure, 2,3,4-Trichlorbenzolsulfonsäure, 2,4,6-Trichlorbenzolsulfonsäure, 2,3,4,5-Tetrachlorbenzolsulfonsäure, 2,3,5,6-Tetrachlorbenzolsulfonsäure, 2,3,4,6-Tetrachlorbenzolsulfonsäure, Pentachlorbenzolsulfonsäure, 1-Chlornaphthalin-x-sulfonsäure, 1,x-Dichlornaphthalin-y-sulfonsäure, 1-Bromnaphthalin-x-sulfonsäure, 4,5-Dichlorbenzol-1,3-disulfonsäure, Kaliumdiphenylsulfonsulfonat, Natriumtrichlorbenzolsulfonat, Kaliumperfluorbutansulfonat, p-Toluolsulfonsäure-Natriumsalz, Poly(styrolsulfonsäure-Natriumsalz) und ähnlichen Salzen, Fluoralkylsulfonamidatsalzen, Kalium-2,4,5-trichlorbenzol, Kalium-2,4,5-trichlorbenzolsulfonat und Kombinationen davon ausgewählt ist, und
den Schritt des Zugebens von mindestens einem Antitropfmittel, wobei das Antitropfmittel aus der Gruppe bestehend aus fluorierten Polyolefinen und einer Mischung von Polytetrafluorethylen und Styrol-Acrylnitril-Copolymer ausgewählt ist.

## Revendications

1. Composition extrudée stratifiée comprenant :
une paire de couches non moussées opposées supérieure et inférieure ;
au moins une couche moussée centrale intercalée, la couche moussée centrale étant moussée à l'aide de fluides supercritiques ;
chacune desdites couches comprenant un retardateur de flamme de type copolyphosphonate, le copolyphosphonate possédant un poids moléculaire moyen en poids compris entre 10 000 g/mole et 100 000 g/mole (mesuré par CPG), le copolyphosphonate possédant une polydispersité comprise entre 2 et 7, le copolyphosphonate possédant une unique température de transition vitreuse ;
un rapport en pourcentage des au moins trois couches se situant dans la plage de 7 à 13 %/75 à 85 %/7 à 13 %, les au moins trois couches totalisant 100 %, une épaisseur totale des trois couches se situant dans la plage de 1,016 mm à 12,7 mm (0,040" à 0,500"); et
le stratifié possédant une valeur Totale de Débit Calorifique OSU de < 65 kWmin/m² et une valeur Maximale de Débit Calorifique OSU de < 65 kW/m² (mesurée avec la norme ASTM E906).

2. Composition extrudée stratifiée selon la revendication 1,
le copolyphosphonate étant choisi dans le groupe constitué par des copoly(phosphonate carbonates) et des copoly(esters de phosphonate).

3. Composition extrudée stratifiée selon la revendication 2,
le copolyphosphonate étant choisi dans le groupe constitué par des copoly(phosphonate carbonate(s)) à blocs, des copoly(phosphonate carbonates) statistiques, des copoly(esters de phosphonate) à blocs et des copoly(esters de phosphonate) statistiques.

4. Composition extrudée stratifiée selon la revendication 3,
le bloc de polycarbonate du copolyphosphonate étant un polycarbonate ramifié.

5. Composition extrudée stratifiée selon la revendication 3,
le bloc de polycarbonate du copolyphosphonate étant un polycarbonate linéaire.

6. Composition extrudée stratifiée selon la revendication 1, laquelle comprend en outre :
au moins un polymère supplémentaire choisi dans le groupe constitué par des polyacrylonitriles, des polystyrènes, des polyamides, un poly(téréphtalate d'éthylène), un poly(téréphtalate de butylène), un poly(téréphtalate de triméthylène), des polyuréthanes, des polyurées, des polyépoxys, des polyimides, un polyarylate, un poly(éther d'arylène), un polyéthylène, un poly(oxyde d'éthylène), un poly(sulfure de phénylène), un polypropylène, un poly(oxyde de phénylène), un poly(ester de vinyle), un poly(chlorure de vinyle), un polymère de bismaléidimide, un polyanhydride, des poly(acrylonitrile butadiène styrènes), des ABS/PC, des polystyrènes chocs, un PPO/HIPS, des polymères cristallins liquides, des polymères de cellulose, et des combinaisons correspondantes.

7. Composition extrudée stratifiée selon la revendication 3,
le copolyphosphonate étant illustré ci-dessous en tant que formule (VII) : 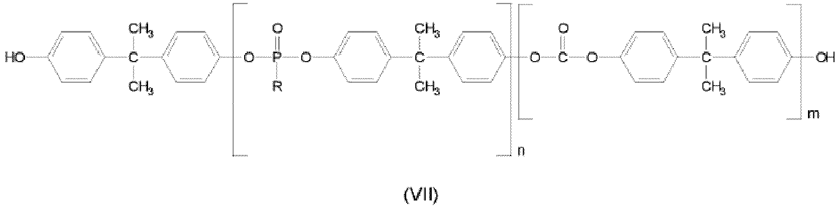 n se situant dans la plage de 20 à 45 % inclus ;
m se situant dans la plage de 80 à 55 % inclus ; et
m + n = 100 %; et en outre
R étant choisi dans le groupe constitué par des groupes C₁₋₂₄ alkyle et des groupes cycliques en C₅₋₄₀.

8. Composition extrudée stratifiée selon la revendication 7,
le copolyphosphonate étant illustré ci-dessous en tant que formule (VI) :

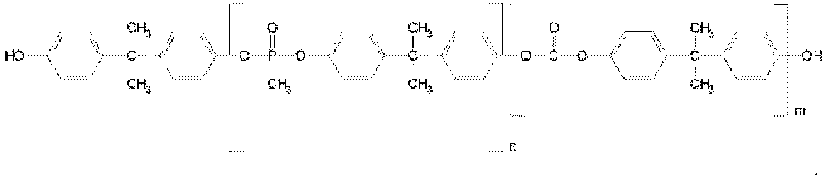

9. Composition extrudée stratifiée selon la revendication 1, laquelle comprend en outre au moins un sel organique, le sel organique étant choisi dans le groupe constitué par le 2,5-difluorobenzènesulfonate de sodium, le 2,4,5-tribromobenzènesulfonate de sodium, le p-iodobenzènesulfonate de sodium, le 2,4-dibromo-5-fluorobenzènesulfonate de sodium, le 2,5-dichlorobenzènesulfonate de calcium, le 2,5-dichlorobenzène-1,3-disulfonate disodique, le 4,4'-dibromobiphényl-3-sulfonate de sodium, le 1,4-dichloronaphtalène-x,y-di-sulfonate disodique, le 2,2-dichloro-1,1-bis(4'-chlorophényl)éthylène-3',3"-disulfonate disodique, le 2,4-dinitrobenzènesulfonate de sodium, le 2-chloro-5-nitrobenzènesulfonate de calcium, le 3-(trifluorométhyl)benzènesulfonate de calcium, le 3-bromo-5-(trifluorométhyl)benzènesulfonate de sodium, le 2,4,5-trichlorobenzènesulfonate de lithium, le p-bromobenzènesulfonate de lithium, le 2,4,5-trichlorobenzènesulfonate de baryum, le 4-chloro-3-nitrobenzènesulfonate de potassium, le 2,4,5-trichlorobenzènesulfonate de magnésium, le 2,4,5-trichlorobenzènesulfonate de strontium, le 2-chloro-4-cyanobenzènesulfonate de sodium, le 3-chloro-4-méthylbenzènesulfonate de calcium, le 4-chloro-3-méthylbenzènesulfonate de sodium, le 3,5-dichloro-2-méthylbenzènesulfonate de sodium, le 3-(trifluorométhyl)-5-(ar-pentachlorobenzyl)benzènesulfonate de sodium, le 2-chloro-4-(trifluorovinyl)benzènesulfonate de sodium, le 4'-bromo-α,α'-dichlorostilbènesulfonate de sodium, le tétrakis(4-chlorophényl)éthylène-3-sulfonate de potassium, le 4,2',3',4',5',6',4"-heptachlorotriphénylméthane-3-sulfonate de sodium, le 1,1,1-trichloro-2-(4'-cyanophényl)-2-(4-chlorophényl)éthanesulfonate disodique, le 2,2-bis(4'-chlorophényl)-hexafluoropropane-3'-sulfonate de sodium, le 9,10-dichloroanthracènesulfonate de lithium, le 1,3,6,8-tétrachloropyrène-4-sulfonate de sodium, le 2,3-dichlorobenzènesulfonate de sodium, le 2,3,4-trichlorobenzènesulfonate de sodium, le pentachlorobenzènesulfonate de sodium, le 2,3,5,6-tétrachlorobenzènesulfonate de sodium, le 2,3,4,5-tétrabromobenzènesulfonate de sodium, le 2,4,6-trichlorobenzène-1,3,5-trisulfonate trisodique, l'acide p-fluorobenzènesulfonique, l'acide 2,3,4,5-tétrafluorobenzènesulfonique, l'acide pentafluorobenzènesulfonique, l'acide p-chlorobenzènesulfonique, l'acide 2,4-dichlorobenzènesulfonique, l'acide p-bromobenzènesulfonique, l'acide 2,5 dibromobenzènesulfonique, l'acide 2-bromo-4-chlorobenzènesulfonique, l'acide 2-chloro-4-bromobenzènesulfonique, l'acide 2-bromo-5-chlorobenzènesulfonique, l'acide 2-chloro-5-bromobenzènesulfonique, l'acide 2,3,4-trichlorobenzènesulfonique, l'acide 2,4,6 trichlorobenzènesulfonique, l'acide 2,3,4,5-tétrachlorobenzènesulfonique, l'acide 2,3,5,6 tétrachlorobenzènesulfonique, l'acide 2,3,4,6-tétrachlorobenzènesulfonique, l'acide pentachlorobenzènesulfonique, l'acide 1-chloronaphtalène-x-sulfonique, l'acide 1,x-dichloronaphtalène-y-sulfonique, l'acide 1-bromonaphtalène-x-sulfonique, l'acide 4,5-dichlorobenzène-1-,3-disulfonique, le diphénylsulfonesulfonate de potassium, le trichlorobenzènesulfonate de sodium, le perfluorobutanesulfonate de potassium, le sel de sodium de l'acide p-toluènesulfonique, un poly(sel de sodium de l'acide styrènesulfonique) et des sels similaires, des sels de fluoroalkylsulfonamidate, le 2,4,5-trichlorobenzène de potassium, le 2,4,5 trichlorobenzènesulfonate de potassium, et des combinaisons correspondantes.

10. Composition extrudée stratifiée selon la revendication 1, laquelle comprend en outre au moins un agent anti-égouttement, l'agent anti-égouttement étant choisi dans le groupe constitué par des polyoléfines fluorées et un mélange de polytétrafluoroéthylène et de copolymère de styrène-acrylonitrile.

11. Composition extrudée stratifiée selon la revendication 1, laquelle comprend en outre au moins un agent bromé présent en des quantités inférieures à 1 % en poids.

12. Composition extrudée stratifiée selon la revendication 1, laquelle est thermoformée en une forme moulée.

13. Procédé pour synthétiser un stratifié léger et retardateur de flamme possédant au moins une paire opposée de couches non moussées supérieure et inférieure et au moins une couche moussée centrale intercalée, comprenant les étapes de :
extrusion de la paire opposée de couches non moussées supérieure et inférieure ;
extrusion de manière simultanée d'au moins une couche moussée centrale intercalée à l'aide d'un fluide supercritique en tant qu'agent gonflant ;
thermoformage du stratifié extrudé en une forme moulée ;
chacune desdites couches comprenant un retardateur de flamme de type copolyphosphonate, le copolyphosphonate possédant un poids moléculaire moyen en poids compris entre 10 000 g/mole et 100 000 g/mole (mesuré par CPG), le copolyphosphonate possédant une polydispersité comprise entre 2 et 7, le copolyphosphonate possédant une unique température de transition vitreuse ;
un rapport en pourcentage des au moins trois couches se situant dans la plage de 7 à 13 %/75 à 85 %/7 à 13 %, les au moins trois couches totalisant 100 %; et
le stratifié possédant une valeur Totale de Débit Calorifique OSU de < 65 kWmin/m² et une valeur Maximale de Débit Calorifique OSU de < 150 kW/m² (mesurée avec la norme ASTM E906).

14. Produit du procédé selon la revendication 13.

15. Procédé selon la revendication 13, lequel comprend en outre :
l'étape d'ajout d'au moins un sel organique, le sel organique étant choisi dans le groupe constitué par le 2,5-difluorobenzènesulfonate de sodium, le 2,4,5-tribromobenzènesulfonate de sodium, le p-iodobenzènesulfonate de sodium, le 2,4-dibromo-5-fluorobenzènesulfonate de sodium, le 2,5-dichlorobenzènesulfonate de calcium, le 2,5-dichlorobenzène-1,3-disulfonate disodique, le 4,4'-dibromobiphényl-3-sulfonate de sodium, le 1,4-dichloronaphtalène-x,y-di-sulfonate disodique, le 2,2-dichloro-1,1-bis(4'-chlorophényl)éthylène-3',3"-disulfonate disodique, le 2,4-dinitrobenzènesulfonate de sodium, le 2-chloro-5-nitrobenzènesulfonate de calcium, le 3-(trifluorométhyl)benzènesulfonate de calcium, le 3-bromo-5-(trifluorométhyl)benzènesulfonate de sodium, le 2,4,5-trichlorobenzènesulfonate de lithium, le p-bromobenzènesulfonate de lithium, le 2,4,5-trichlorobenzènesulfonate de baryum, le 4-chloro-3-nitrobenzènesulfonate de potassium, le 2,4,5-trichlorobenzènesulfonate de magnésium, le 2,4,5-trichlorobenzènesulfonate de strontium, le 2-chloro-4-cyanobenzènesulfonate de sodium, le 3-chloro-4-méthylbenzènesulfonate de calcium, le 4-chloro-3-méthylbenzènesulfonate de sodium, le 3,5-dichloro-2-méthylbenzènesulfonate de sodium, le 3-(trifluorométhyl)-5-(ar-pentachlorobenzyl)benzènesulfonate de sodium, le 2-chloro-4-(trifluorovinyl)benzènesulfonate de sodium, le 4'-bromo-α,α'-dichlorostilbènesulfonate de sodium, le tétrakis(4-chlorophényl)éthylène-3-sulfonate de potassium, le 4,2',3',4',5',6',4"-heptachlorotriphénylméthane-3-sulfonate de sodium, le 1,1,1-trichloro-2-(4'-cyanophényl)-2-(4-chlorophényl)éthanesulfonate disodique, le 2,2-bis(4'-chlorophényl)-hexafluoropropane-3'-sulfonate de sodium, le 9,10-dichloroanthracènesulfonate de lithium, le 1,3,6,8-tétrachloropyrène-4-sulfonate de sodium, le 2,3-dichlorobenzènesulfonate de sodium, le 2,3,4-trichlorobenzènesulfonate de sodium, le pentachlorobenzènesulfonate de sodium, le 2,3,5,6-tétrachlorobenzènesulfonate de sodium, le 2,3,4,5-tétrabromobenzènesulfonate de sodium, le 2,4,6-trichlorobenzène-1,3,5-trisulfonate trisodique, l'acide p-fluorobenzènesulfonique, l'acide 2,3,4,5-tétrafluorobenzènesulfonique, l'acide pentafluorobenzènesulfonique, l'acide p-chlorobenzènesulfonique, l'acide 2,4-dichlorobenzènesulfonique, l'acide p-bromobenzènesulfonique, l'acide 2,5 dibromobenzènesulfonique, l'acide 2-bromo-4-chlorobenzènesulfonique, l'acide 2-chloro-4-bromobenzènesulfonique, l'acide 2-bromo-5-chlorobenzènesulfonique, l'acide 2-chloro-5-bromobenzènesulfonique, l'acide 2,3,4-trichlorobenzènesulfonique, l'acide 2,4,6 trichlorobenzènesulfonique, l'acide 2,3,4,5-tétrachlorobenzènesulfonique, l'acide 2,3,5,6 tétrachlorobenzènesulfonique, l'acide 2,3,4,6-tétrachlorobenzènesulfonique, l'acide pentachlorobenzènesulfonique, l'acide 1-chloronaphtalène-x-sulfonique, l'acide 1,x-dichloronaphtalène-y-sulfonique, l'acide 1-bromonaphtalène-x-sulfonique, l'acide 4,5-dichlorobenzène-1-,3-disulfonique, le diphénylsulfonesulfonate de potassium, le trichlorobenzènesulfonate de sodium, le perfluorobutanesulfonate de potassium, le sel de sodium de l'acide p-toluènesulfonique, un poly(sel de sodium de l'acide styrènesulfonique) et des sels similaires, des sels de fluoroalkylsulfonamidate, le 2,4,5-trichlorobenzène de potassium, le 2,4,5 trichlorobenzènesulfonate de potassium, et des combinaisons correspondantes, et
l'étape d'ajout d'au moins un agent anti-égouttement, l'agent anti-égouttement étant choisi dans le groupe constitué par des polyoléfines fluorées et un mélange de polytétrafluoroéthylène et de copolymère de styrène-acrylonitrile.
